(19) Europäisches Patentamt
European Patent Office
Office européen des brevets

(11) EP 3 270 191 B1

(12) **EUROPEAN PATENT SPECIFICATION**

(45) Date of publication and mention of the grant of the patent:
**29.04.2020 Bulletin 2020/18**

(21) Application number: **16761847.9**

(22) Date of filing: **11.03.2016**

(51) Int Cl.:
***G02B 1/111*** *(2015.01)* ***B32B 7/02*** *(2019.01)*

(86) International application number:
**PCT/JP2016/057688**

(87) International publication number:
**WO 2016/143881 (15.09.2016 Gazette 2016/37)**

# (54) ANTIREFLECTION OPTICAL MEMBER

ENTSPIEGELTES OPTISCHES ELEMENT

ÉLÉMENT OPTIQUE ANTIREFLET

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2015 JP 2015047851**
**09.03.2016 JP 2016045609**

(43) Date of publication of application:
**17.01.2018 Bulletin 2018/03**

(73) Proprietor: **FUJIFILM Corporation**
**Tokyo 106-8620 (JP)**

(72) Inventors:
- **YASUDA, Hideki**
  **Fujinomiya-shi, Shizuoka 418-8666 (JP)**
- **MATSUNO, Ryou**
  **Fujinomiya-shi, Shizuoka 418-8666 (JP)**
- **TANI, Takeharu**
  **Fujinomiya-shi, Shizuoka 418-8666 (JP)**

(74) Representative: **Klunker IP Patentanwälte PartG mbB**
**Destouchesstraße 68**
**80796 München (DE)**

(56) References cited:
**EP-A1- 2 270 554** **EP-A1- 2 589 992**
**WO-A1-2009/131206** **JP-A- S52 143 044**
**US-A1- 2004 005 482**

- **TAKEHARU TANI ET AL: "Transparent near-infrared reflector metasurface with randomly dispersed silver nanodisks", OPTICS EXPRESS, vol. 22, no. 8, 9 April 2014 (2014-04-09), page 9262, XP055309842, DOI: 10.1364/OE.22.009262**
- **HIDEKI YASUDA ET AL.: 'Gin Nano Ishidatami Kozo o Riyo shita Shinki Hansha Boshi Kozo' THE 62ND JSAP SPRING MEETING KOEN YOKOSHU vol. 62, 26 February 2015, pages 04 - 175, XP009500736**
- **TANI, TAKEHARU ET AL.: 'Transparent near-infrared reflector metasurface with randomly dispersed silver nanodisks' OPTICS EXPRESS vol. 22, no. 8, pages 9262 - 9270, XP055309842**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 270 191 B1

## Description

## BACKGROUND OF THE INVENTION

1. Field of the Invention

The present invention relates to an antireflection optical member. More specifically, the present invention relates to an antireflection optical member for preventing reflection from a substrate.

2. Description of the Related Art

As the antireflection optical member, an optical member including an antireflection film which includes a dielectric multi-layer film or includes a visible light absorbing layer formed of a metal fine particle layer in multiple layers is known. For example, JP2014-046597A describes a multi-layer structure including a metal particle-containing layer, a layer A having a refractive index n1, and a layer B having a refractive index n2 in this order, in which one of the following Conditions (1-1) and (2-1) is satisfied.

Condition (1-1): n1<n2 and the following Expression (1-1) is satisfied

Expression (1-1)

$$\lambda/4+m\lambda/2<n1\times d1<\lambda/2+m\lambda/2$$

(In Expression (1-1), m represents an integer of 0 or more, $\lambda$ represents a wavelength (unit: nm) where reflection is desired to be prevented, n1 represents the refractive index of the layer A, and d1 represents a thickness (unit: nm) of the layer A)

Condition (2-1): n1>n2 and the following Expression (2-1) is satisfied

Expression (2-1)

$$0+m\lambda/2<n1\times d1<\lambda/4+m\lambda/2$$

(In Expression (2-1), m represents an integer of 0 or more, $\lambda$ represents a wavelength (unit: nm) where reflection is desired to be prevented, n1 represents the refractive index of the layer A, and d1 represents a thickness (unit: nm) of the layer A.)

JP2014-046597A provides a multi-layer structure including the metal fine particle layer and the layers A and B having specific thicknesses and specific refractive indices, in which reflected light at the wavelength $\lambda$ where reflection is desired to be prevented can be suppressed.

In order to obtain a sufficient antireflection effect, an antireflection optical member including an absorbing material in a second outermost layer is proposed. For example, WO2004/031813A describes an antireflection film in which a plurality of thin films are formed on a substrate film, in which a second outermost layer from the substrate film has light absorbing properties. In a preferable aspect of the antireflection film described in WO2004/031813A in which a plurality of thin films are formed on a substrate film, a second outermost layer from the substrate film has light absorbing properties, a refractive index of an outermost layer from the substrate film is 1.49 to 1.52, a real part of a refractive index of the second outermost layer is 1.45 to 1.85, and a difference between the real part of the refractive index of the second outermost layer and a real part of the refractive index of the outermost layer is 0.09 or lower, and an extinction coefficient k of the second outermost layer at a wavelength of 550 nm satisfies $0.1<k<5$. According to WO2004/031813A, due to the above-described configuration, an antireflection film having a low reflectance and excellent scratch resistance can be provided.

Advanced Optical Materials Volume 3, pages 44-48 (2015) describes a technique of controlling a refractive index using a metamaterial in which a host medium includes guests having a smaller size than a wavelength $\lambda$ of light.

EP 2 270 554 A1 discloses an antireflection optical member for preventing reflection from a substrate, wherein the optical member comprises a laminate structure including a dielectric layer, an ultra-low refractive index layer and the substrate, laminated in this order. Further, a real part n2 of a refractive index of the ultra-low refractive index layer satisfies n2<1, the physical thickness d2 of the ultra-low refractive layer satisfies the expression 1 of claim 1, and the dielectric layer satisfies expression 2 of claim 1. TAKEHARU TANI ET AL: "Transparent near-infrared reflector metasurface with randomly dispersed silver nanodisks" Optics Express, vol. 22, no. 8, 9 April 2014 (2014-04-09), page 9262, XP055309842, DOI: 10.1384/OE.22.009262 discloses a near-infrared reflector. The document describes certain materials and structures which may be suitable to reflect near-infrared radiation having wavelengths between 780nm to

2500nm.

## SUMMARY OF THE INVENTION

The multi-layer structure described in JP2014-046597A is a structure for suppressing reflection from the metal particle-containing layer in order to increase the transmittance of a heat ray shielding agent, and an object thereof is not preventing reflection from a substrate. The present inventors performed an investigation on the performance of the antireflection optical member described in JP2014-046597A and found that this antireflection optical member does not have a laminate structure of air/dielectric layer/ultra-low refractive index layer/substrate and cannot prevent reflection from a substrate.

In addition, the present inventors performed an investigation on the antireflection optical member described in WO2004/031813A and found that this antireflection optical member does not exhibit a sufficiently low reflectance.

Advanced Optical Materials Volume 3, pages 44-48 (2015) does not describe a technique of preparing a laminate structure of an antireflection optical member using a metamaterial.

An object to be achieved by the present invention is to provide an antireflection optical member for preventing reflection from a substrate.

In order to achieve the above-described object, the present inventors performed a thorough investigation and found that reflection from a substrate can be prevented by a new optical design of a laminate structure including a dielectric layer, an ultra-low refractive index layer, and a substrate that are laminated in this order, in which the ultra-low refractive index layer has a metamaterial structure having a smaller size than a wavelength, a real part of a refractive index of the ultra-low refractive index layer and a physical thickness of the ultra-low refractive index layer are in specific ranges, and an optical thickness of the dielectric layer is in a specific range. WO2004/031813A does not disclose a case where a real part of a refractive index is lower than 1.

Preferable aspects of the present invention for achieving the above-described object are as follows.

[1] An antireflection optical member which is an antireflection structure for preventing reflection from a substrate, the antireflection optical member comprising:

a laminate structure including a dielectric layer, an ultra-low refractive index layer, and the substrate that are laminated in this order,
in which the ultra-low refractive index layer has a metamaterial structure in which a host medium includes guests having a smaller size than a wavelength $\lambda$ of light whose reflection is to be prevented,
a real part n2 of a refractive index of the ultra-low refractive index layer satisfies $n2<1$,
a physical thickness d2 of the ultra-low refractive index layer satisfies the following Expression 1, and
the dielectric layer satisfies the following Expression 2,

$$d2<\lambda/10 \quad \ldots \quad \text{Expression 1}$$

$$M-\lambda/8<n1\times d1<M+\lambda/8 \quad \ldots \quad \text{Expression 2}$$

$$M=(4m+1)\times\lambda/8 \quad \ldots \quad \text{Expression 3}$$

where d1 represents a physical thickness of the dielectric layer, n1 represents a real part of a refractive index of the dielectric layer, and m represents an integer of 0 or more.

[2] In the antireflection optical member according to [1], it is preferable that the dielectric layer is an outermost layer.
[3] In the antireflection optical member according to [1] or [2], it is preferable that an imaginary part k2 of the refractive index of the ultra-low refractive index layer is 2 or lower.
[4] In the antireflection optical member according to any one of [1] to [3], it is preferable that the metamaterial structure is a single layer.
[5] In the antireflection optical member according to any one of [1] to [4], it is preferable that the guests are flat or rod-shaped.
[6] In the antireflection optical member according to any one of [1] to [5], it is preferable that the guests are metal particles and that a structure in which the metal particles are dispersed in the host medium is adopted.

[7] In the antireflection optical member according to [6], it is preferable that the metal particles include gold, silver, platinum, copper, aluminum, or an alloy including one or more metals selected from the group consisting of gold, silver, platinum, and aluminum.

[8] In the antireflection optical member according to any one of [1] to [7], it is preferable that the wavelength λ of the light whose reflection is to be prevented is 400 to 700 nm.

[9] In the antireflection optical member according to any one of [1] to [7], it is preferable that the wavelength λ of the light whose reflection is to be prevented is higher than 700 nm and 2500 nm or lower.

[10] A method of manufacturing the antireflection optical member according to any one of [1] to [9], comprising: a step of manufacturing the metamaterial structure using a lithography method.

[11] A method of manufacturing the antireflection optical member according to any one of [1] to [9], comprising: a step of manufacturing the metamaterial structure using a self-organization method.

According to the present invention, an antireflection optical member for preventing reflection from a substrate can be provided.

## BRIEF DESCRIPTION OF THE DRAWINGS

Fig. 1 is a schematic diagram showing a cross-section of an example of an antireflection optical member according to the present invention.

Fig. 2 is a schematic diagram showing an antireflection mechanism in which the antireflection optical member according to the present invention is used.

Fig. 3 is a schematic diagram showing the antireflection mechanism in which the antireflection optical member according to the present invention is used.

Fig. 4 is an SEM image showing a plan view of a metal particle-containing layer.

Fig. 5 is a schematic diagram showing an example of a flat metal particle.

Fig. 6 is a schematic diagram showing another example of a flat metal particle.

Fig. 7 is a graph showing a simulation on the wavelength dependence of the transmittance per aspect ratio of the flat metal particles.

Fig. 8 is a schematic cross-sectional view showing a state where the metal particle-containing layer including the flat metal particles is present in the antireflection optical member according to the present invention, in which an angle (θ) between the metal particle-containing layer including the flat metal particles (parallel to a plane of a substrate) and a principal plane (plane which determines equivalent circle diameter) of a flat metal particle is shown.

Fig. 9 is a schematic cross-sectional view showing a semmstate where the metal particle-containing layer including the flat metal particles is present in the antireflection optical member according to the present invention, in which regions where the flat metal particle are present in an antireflection structure of the metal particle-containing layer in a depth direction are shown.

Fig. 10 is a schematic cross-sectional view showing another example of a state where the metal particle-containing layer including the flat metal particles is present in the antireflection optical member according to the present invention.

Fig. 11 is a graph showing a relationship between a physical thickness d2 of an ultra-low refractive index layer and a reflectance of an antireflection optical member according to each of Examples 1-1 to 1-8 and Comparative Examples 1.

Fig. 12 is a graph showing the results of an experiment on wavelength dependence of a reflectance regarding an antireflection optical member according to each of Examples 2-1 to 2-4.

Fig. 13 is a schematic diagram showing a cross-section of another aspect of the antireflection optical member according to the present invention.

Fig. 14 is a schematic diagram showing a cross-section of an aspect of the antireflection optical member according to the present invention in which a host medium in a metamaterial structure of the ultra-low refractive index layer is formed of the same material as the dielectric layer.

Fig. 15 is an SEM image showing a substrate and a silver particle-dispersed structure used in Example 5.

Fig. 16 is a schematic diagram showing a cross-section of another aspect of the antireflection optical member according to the present invention in which a host medium in a metamaterial structure of the ultra-low refractive index layer is formed of the same material as the dielectric layer.

## DESCRIPTION OF THE PREFERRED EMBODIMENTS

Hereinafter, an antireflection optical member according to the present invention will be described in detail.

The following description regarding components has been made based on a representative embodiment of the present invention. However, the present invention is not limited to the embodiment. In this specification, numerical ranges represented by "to" include numerical values before and after "to" as lower limit values and upper limit values.

A complex refractive index (=n-ik) of an object is divided into a real part n (a general refractive index of the object) and an imaginary part k (extinction coefficient).

"Metamaterial" refers to a material capable of achieving optical characteristics, which are not present in the natural world, by using a guest material (structure, component) having a sufficiently smaller size than a wavelength of the electromagnetic waves. Recently, an artificial metamaterial has attracted attention.

"Metamaterial structure" refers to a structure in which a plurality of guests designed in a specific shape (for example, particles including a metal element) are embedded in a host medium. In the metamaterial structure, in a case where each of the guests has a sufficiently smaller size than a wavelength of light, a material as a host (in particular, regions around the guests) acts like a homogeneous material with respect to light and changes shapes of the individual guests such that optical characteristics can be controlled. Due to the metamaterial structure, the dielectric constant and the magnetic permeability can be controlled independently.

"The size" of the guest refers to a major axis length of each of the guests.

"Dielectric layer" refers to a layer acting like an insulator which is non-conductive at a DC voltage.

[Antireflection Optical Member]

An antireflection optical member according to the present invention which is an antireflection structure for preventing reflection from a substrate includes

a laminate structure including a dielectric layer, an ultra-low refractive index layer, and the substrate that are laminated in this order,

in which the ultra-low refractive index layer has a metamaterial structure in which a host medium includes guests having a smaller size than a wavelength λ of light whose reflection is to be prevented,

a real part n2 of a refractive index of the ultra-low refractive index layer satisfies n2<1,

a physical thickness d2 of the ultra-low refractive index layer satisfies the following Expression 1, and

the dielectric layer satisfies the following Expression 2,

$$d2<\lambda/10 \ldots \qquad \text{Expression 1,}$$

$$M-\lambda/8<n1\times d1<M+\lambda/8 \quad \ldots \qquad \text{Expression 2,}$$

$$M=(4m+1)\times\lambda/8 \ \ldots \qquad \text{Expression 3,}$$

where d1 represents a physical thickness of the dielectric layer, n1 represents a real part of a refractive index of the dielectric layer, and m represents an integer of 0 or more.

Due to the above-described configuration, an antireflection optical member for preventing reflection from a substrate can be provided.

Hereinafter, a preferable aspect of the antireflection optical member according to the present invention will be described.

<Antireflection Mechanism>

In the present invention, in a case where light is incident on the antireflection optical member from the surface side of the dielectric layer, a mechanism of canceling out reflected light from an dielectric layer-side interface of the substrate by causing it to interfere with reflected light from an interface between the dielectric layer and the external environment and reflected light from an interface between the dielectric layer and the ultra-low refractive index layer will be described.

Figs. 1 and 13 are schematic diagrams showing cross-sections of examples of the antireflection optical member according to the present invention, respectively.

An antireflection optical member 1 in the example shown in Fig. 1 includes a laminate structure in which a dielectric layer 5, an ultra-low refractive index layer 4, and a substrate 2 are laminated in this order, in which the dielectric layer 5 is the outermost layer. In the ultra-low refractive index layer 4, guests 42 are included in a host medium 41. The

dielectric layer 5 and the ultra-low refractive index layer 4 will be collectively called an antireflection structure 3A.

The antireflection optical member 1 in the example shown in Fig. 13 includes a laminate structure in which the dielectric layer 5, the ultra-low refractive index layer 4, a second dielectric layer 6, and the substrate 2 are laminated in this order, in which the dielectric layer 5 is the outermost layer. The dielectric layer 5, the ultra-low refractive index layer 4, and the second dielectric layer 6 will be collectively called an antireflection structure 3B.

In the antireflection optical member according to the present invention, the dielectric layer 5 is not necessarily the outermost layer (not shown).

1. Conditions of Antireflection

In general, in order to prevent reflection from a substrate in a laminate structure shown in Fig 2, it is necessary that reflection A and reflection B satisfy conditions regarding "reflection amplitude" and "reflection phase", respectively. Specific conditions are as follows.

Condition regarding "reflection amplitude":

$$Ra=Rb \quad \ldots \qquad \text{Expression 11}$$

Condition regarding "reflection phase":

$$\theta_B + \frac{2nd}{\lambda}2\pi - \theta_A = (2m+1)\pi \quad \cdot\cdot\cdot \ \text{Expression 12}$$

2. Antireflection Conditions in case where Ultra-Low Refractive Index Layer is used

For easy understanding of the antireflection conditions of the antireflection optical member 1 of the example shown in Fig. 1, antireflection conditions in a structure shown in Fig. 3 will be described with reference to Fig. 3 which is a schematic diagram.

Reference numerals in Fig. 3 are defined as follows.

n1: the real part of the refractive index of the dielectric layer
n2: the real part of the refractive index of the ultra-low refractive index layer
n3: the real part of the refractive index of the substrate
d1: the physical thickness of the dielectric layer
d2: the physical thickness of the ultra-low refractive index layer

$$\Delta=4\pi\cdot n2\cdot d2/\lambda$$

At this time, amplitude reflectances $r_0$ and $r_{ij}$ at respective interfaces are defined as follows.

$$r_0 = \frac{1-n_1}{1+n_1}$$

$$r_{ij} = \frac{n_i-n_j}{n_i+n_j}$$

In a case where the physical thickness of the ultra-low refractive index layer is extremely thin, in Fig. 1, reflected light C from an interface between the dielectric layer and the ultra-low refractive index layer and reflected light from an interface of the substrate on the dielectric layer side (an interface between the ultra-low refractive index layer and the substrate) can be collectively considered as "reflection B" shown in Fig. 3, and the above-described antireflection conditions can be applied thereto.

$$R_B = Abs[(\frac{r_{12} + r_{23}e^{i\Delta}}{1 - r_{23}r_{12}e^{i\Delta}})] \cdot\cdot\cdot \text{ Expression 13}$$

$$\theta_B = \mathrm{Im}[\log(\frac{r_{12} + r_{23}e^{i\Delta}}{1 - r_{23}r_{12}e^{i\Delta}})] \cdot\cdot\cdot \text{ Expression 14}$$

wherein Abs[*] represents an absolute value of *, and Im[*] represents an imaginary part of *.

Next, d1 and d2 which are optimal for preventing reflection from the substrate are derived from Expressions 11 to 14.

In a case where the refractive index of the ultra-low refractive index layer is low and the physical thickness thereof is extremely low, the optical thickness of the ultra-low refractive index layer is sufficiently smaller than the wavelength $\lambda$ of the light whose reflection is to be prevented. That is, $\Delta=4\pi\cdot n2\cdot d2/\lambda<<1$. At this time, Maclaurin expansion can be used for $e^i\Delta$, and the following Expression 15 is obtained.

$$e^{i\Delta} = (1 + i\Delta - \frac{\Delta^2}{2}) \cdot\cdot\cdot \text{ Expression 15}$$

By substituting Expression 15 to Expression 11 regarding "reflection amplitude", the following Expression 16 is obtained, and d2 which is optimal for preventing reflection from the substrate is obtained.

$$d_2 = \frac{\lambda}{4\pi n_2}\sqrt{\frac{(r_{12}+r_{23})^2 - r_0^{\,2}(1+r_{12}r_{23})^2}{r_{12}r_{23}(1-r_0^{\,2})}} \cdot\cdot\cdot \text{ Expression 16}$$

Further by substituting Expression 16 to Expressions 14 and Expression 12, d1 which is optimal for preventing reflection from the substrate can be obtained.

d1 and d2, which satisfy the above-described expressions, represent the thicknesses which are optimal for preventing reflection and change depending on the refractive indices of the dielectric layer, the ultra-low refractive index layer, and the substrate.

For example, in a case where nl=1.5, n2=0.1, and n3=1.5, d1=40 nm and d2=24 nm.

In this case, d1 represents an optical thickness of $0.11\times\lambda$, d2 represents an optical thickness of $0.004\times\lambda$, and it can be seen that both d1 and d2 are different from the optical thickness ($\lambda/4$) of an optical layer used in a typical antireflection structure.

d2 which satisfies Expression 16 and d1 which is derived from Expression 16 are theoretically the optimal thicknesses. In a case where the thicknesses are similar to values which satisfy Expression 16, a sufficient antireflection effect can be obtained. The present inventors performed an optical simulation while changing the refractive indices and the thicknesses to investigate a range where a sufficient antireflection effect can be obtained. As a result, the following was found.

$$d2<\lambda/10 \ldots \quad \text{Expression 1}$$

$$M-\lambda/8<n1\times d1<M+\lambda/8 \quad \ldots \quad \text{Expression 2}$$

$$M=(4m+1)\times\lambda/8 \ \ldots \quad \text{Expression 3}$$

In a case where Expression 1 is not satisfied, the reflection from the ultra-low refractive index layer is excessively large and is not sufficiently canceled out.

In a case where Expression 2 is not satisfied, the reflection is not sufficiently canceled out due to a difference in phase.

In a case where m=0 in Expression 2, the following expression is satisfied.

$$0 < n1 \times d1 < \frac{\lambda}{4}$$

It can be seen that the optical thickness of the dielectric layer is smaller than the optical thickness (λ/4) of a dielectric layer of a general antireflection structure.

It is known that, as the optical thickness of the dielectric layer increases, the antireflection effect is improved in a wide range. The present invention can provide a structure not only having a sufficient antireflection function but also having antireflection properties in a wide range.

In the antireflection optical member according to the aspect of the present invention shown in Fig. 1, reflected light C from an interface between the dielectric layer and the ultra-low refractive index layer and reflected light from an interface of the substrate on the dielectric layer side (an interface between the ultra-low refractive index layer and the substrate) can be collectively considered as "reflection B" shown in Fig. 3 and can be canceled out by causing them to interfere with reflected light A from an interface between the dielectric layer 5 and the external environment (air) 20.

In the antireflection optical member according to the aspect of the present invention shown in Fig. 13, reflected light from an interface between the dielectric layer and the ultra-low refractive index layer and reflected light from an interface between the ultra-low refractive index layer and the second dielectric layer can be collectively considered as "reflection B" shown in Fig. 3 and can be canceled out by causing them to interfere with reflected light A from an interface between the dielectric layer 5 and the external environment (air) 10.

All the reflectances refer to values measured in a case where light is incident in a direction perpendicular to the surface. In each drawing, for easy understanding of reflection from the front surface or the rear surface in the antireflection structure, incidence and reflection axes tilted from the vertical direction are shown.

Detailed configuration examples of the antireflection structure 3A will be described.

As shown in Fig. 1, the antireflection structure 3A includes: the ultra-low refractive index layer 4 in which a plurality of guests (for example, flat metal particles) 42 are dispersed in the host medium (for example, a binder of the ultra-low refractive index layer) 41; and the dielectric layer 5 that is formed on a surface 4a of the ultra-low refractive index layer 4. Here, the refractive index of the dielectric layer 5 may be lower than or equal to that of the substrate 2.

The antireflection structure may further include another layer. Fig. 13 shows an aspect in which the antireflection structure 3B includes the second dielectric layer.

In the antireflection optical member, it is preferable that the dielectric layer and the ultra-low refractive index layer are in direct contact with each other.

In the antireflection optical member, the ultra-low refractive index layer and the substrate may be in direct contact with each other as shown in Fig. 1, and may be laminated with another layer interposed therebetween as shown in Fig. 13.

(Wavelength of Light whose Reflection is to be Prevented)

The wavelength λ of the light whose reflection is to be prevented can be arbitrarily set depending on the purpose.

In the antireflection optical member according to the present invention, it is preferable that the wavelength λ of the light whose reflection is to be prevented is 400 to 700 nm from the viewpoint of preventing reflection of visible light. In addition, in the antireflection optical member according to the present invention, it is preferable that the wavelength λ of the light whose reflection is to be prevented is higher than 700 nm and 2500 nm or lower from the viewpoint of preventing reflection of near infrared light. In addition, in order to prevent reflection from a range including visible light and near infrared light, for example, the wavelength λ of the light whose reflection is to be prevented can be set to be 380 nm to 780 nm which is visible to human eyes. Typically, light having not a single wavelength but a given wavelength range, for example, white light including a visible range is used as incident light.

Hereinafter, the respective components of the antireflection optical member will be described in more detail.

<Substrate>

The substrate 2 is not particularly limited and can be appropriately selected depending on the purpose. It is preferable that the substrate is a transparent substrate which is optically transparent to the visible light as the incident light. The visible transmittance of the substrate 2 is preferably 70% or higher and more preferably 80% or higher.

As the substrate, for example, various glasses or films can be used.

The substrate 2 may have a single-layer structure or a laminate structure, and the size thereof may be determined depending on the intended use.

Examples of the substrate 2 include a film or a laminated film including: a polyolefin resin such as polyethylene, polypropylene, poly-4-methylpentene-1, or polybutene-1; a polyester resin such as polyethylene terephthalate or polyethylene naphthalate; or a cellulose resin such as a polycarbonate resin, a polyvinyl chloride resin, a polyphenylene sulfide resin, a polyether sulfone resin, a polyphenylene ether resin, a styrene resin, an acrylic resin, a polyamide resin, a polyimide resin, or cellulose acetate. Among these, a triacetyl cellulose (TAC) film or a polyethylene terephthalate (PET) film is preferable.

Typically, the thickness of the substrate 2 is about 10 μm to 500 μm. The thickness of the substrate 2 is preferably 10 μm to 100 μm, more preferably 20 to 75 μm, and still more preferably 35 to 75 μm. In a case where the thickness of the substrate 2 is sufficiently large, adhesion failure is not likely to occur. In addition, in a case where the thickness of the substrate 2 is sufficiently small, the substrate 2 is not excessively strong as a material and tends to be easily adhered to a building material or to a window glass of an automobile as an antireflection film. Further, by sufficiently reducing the thickness of the substrate 2, the visible transmittance increases, the costs of raw materials can be suppressed.

In a case where a film is used as the substrate 2, it is preferable that a hard coat layer is provided on a surface of the film on which the antireflection structure is formed.

In this specification, in a case where a film is used as the substrate 2 and a hard coat layer is formed on a surface of the film on which the antireflection structure is formed, the substrate refers to the substrate including the hard coat layer, and the refractive index of the substrate refers to the refractive index of the hard coat layer.

In a case where a PET film is used as the substrate 2, it is preferable that an easily adhesive layer is provided on a surface of the PET film on which the antireflection structure is formed. By using the PET film including the easily adhesive layer, Fresnel reflection generated between the PET film and the layer laminated thereon can be suppressed, and the antireflection effect can be further improved. It is preferable that the thickness of the easily adhesive layer is adjusted such that the optical path length is 1/4 of the wavelength at which reflection is to be prevented. Examples of the PET film including the easily adhesive layer include LUMIRROR (manufactured by Toray industries Inc.) and COSMOSHINE (manufactured by Toyobo Co., Ltd.).

<Ultra-Low Refractive Index Layer>

The antireflection optical member according to the present invention includes a laminate structure including a dielectric layer, an ultra-low refractive index layer, and the substrate that are laminated in this order,
in which the ultra-low refractive index layer has a metamaterial structure in which a host medium includes guests having a smaller size than a wavelength λ of light whose reflection is to be prevented,
a real part n2 of a refractive index of the ultra-low refractive index layer satisfies n2<1,
a physical thickness d2 of the ultra-low refractive index layer satisfies the following Expression 1, and

$$M-\lambda/8<n1\times d1<M+\lambda/8 \quad \ldots \quad \text{Expression 2,}$$

$$M=(4m+1)\times\lambda/8 \quad \ldots \quad \text{Expression 3}$$

where d1 represents a physical thickness of the dielectric layer, n1 represents a real part of a refractive index of the dielectric layer, and m represents an integer of 0 or more.

In this specification, "the ultra-low refractive index layer" refers to a layer in which a real part of a refractive index is lower than 1.

In the antireflection optical member according to the present invention, the size of the guests is less than the wavelength λ of the light whose reflection is to be prevented and is preferably 0.5 times or less, more preferably 0.4 times or less, and still more preferably 0.3 times or less with respect to the wavelength λ of the light whose reflection is to be prevented. The lower limit value of the size of the guests is not particularly limited and is preferably 0.01 times or more, more preferably 0.02 times or more, and still more preferably 0.05 times or more with respect to the wavelength λ of the light whose reflection is to be prevented.

In the antireflection optical member according to the present invention, it is preferable that the guests are flat or rod-shaped. In a case where the guests are flat, it is preferable that the guests have a structure shown in Fig. 5 or 6, and it is more preferable that the guests have a structure shown in Fig. 5. A preferable aspect in a case where the guests are flat will be described below.

In a case where the guests are rod-shaped, it is preferable that the major axis length and the diameter are in the following ranges, respectively.

The major axis length is less than the wavelength λ of the light whose reflection is to be prevented and is preferably 0.8 times or less, more preferably 0.6 times or less, and still more preferably 0.5 times or less with respect

to the wavelength λ of the light whose reflection is to be prevented. The lower limit value of the major axis length is not particularly limited and is preferably 0.01 times or more, more preferably 0.02 times or more, and still more preferably 0.05 times or more with respect to the wavelength λ of the light whose reflection is to be prevented.

The diameter is less than 0.5 times of the wavelength λ of the light whose reflection is to be prevented and is preferably 0.4 times or less, more preferably 0.3 times or less, and still more preferably 0.1 times or less with respect to the wavelength λ of the light whose reflection is to be prevented. The lower limit value of the major axis length is not particularly limited and is preferably 1 nm or more, more preferably 2 nm or more, and still more preferably 5 nm or more.

In the antireflection optical member according to the present invention, it is preferable that the guests are metal particles and that a structure in which the metal particles are dispersed in the host medium is adopted.

From the viewpoint of easily making the real part n2 of the refractive index of the ultra-low refractive index layer to be lower than 1, it is preferable that the metal particles include gold, silver, platinum, copper, aluminum, or an alloy including one or more of the above-described metals, and it is more preferable that the metal particles are formed of gold, silver, platinum, copper, aluminum, or an alloy including one or more of the above-described metals. In particular, it is preferable that the metal particles include silver, and it is more preferable that the metal particles are formed of silver.

In the antireflection optical member according to the present invention, the host medium is not particularly limited and is preferably a material in which the dispersed stage of the guests can be maintained and more preferably a material in which the dispersed stage of the metal particles can be maintained. The host medium preferably includes at least a polymer as a binder and may further include additives. A preferable aspect of the host medium will be described below.

In the antireflection optical member according to the present invention, the metamaterial structure may be a single layer or a laminate but is preferably a single layer from the viewpoint of improving the antireflection effect. Examples of the metamaterial structure which is a single layer include a metal particle-containing layer described below. Examples of the metamaterial structure which is a laminate include a structure in which two or more metal particle-containing layers described below are laminated.

The host medium in the metamaterial structure of the ultra-low refractive index layer may be formed of a material which is the same as or different from that of the dielectric layer.

In a case where the host medium in the metamaterial structure of the ultra-low refractive index layer is formed of the same material as the dielectric layer, an interface having a clear shape is not necessarily provided between the ultra-low refractive index layer and the dielectric layer. In a case where the host medium in the metamaterial structure of the ultra-low refractive index layer is formed of the same material as the dielectric layer, in a guest distribution in a layer formed of the same material in the thickness direction which is obtained by observation of a cross-section of the antireflection optical member, a thickness portion positioned at the center where the content of the guests is 80% is defined as the host medium in the metamaterial structure of the ultra-low refractive index layer, and the remaining thickness portion in the layer formed of the same material is defined as the dielectric layer. Specifically, in a case where the host medium in the metamaterial structure of the ultra-low refractive index layer is formed of the same material as the dielectric layer, the physical thickness d2 of the ultra-low refractive index layer is determined using the following method.

First, in the guest, a surface (point) which is closest to the substrate is the bottom surface (point), and a surface (point) which is most distant from the substrate is the top surface (point). Next, 10% of the guests having the bottom surface (point) which is close to the substrate and 10% of the guests having the top surface (point) which is distant from the substrate are excluded, and the present invention focuses on the remaining 80% of the guests. Among the remaining 80% of the guests, the distance between the bottom surface (point) of a guest having the bottom surface (point), which is closest to the substrate, and the top surface (point) of a guest having the bottom surface, which is most distant to the substrate, is set as the physical thickness d2 of the ultra-low refractive index layer.

In a case where the host medium in the metamaterial structure of the ultra-low refractive index layer is formed of the same material as the dielectric layer, the method of determining the physical thickness d2 of the ultra-low refractive index layer will be described with reference to Fig. 14. Fig. 14 is a schematic diagram showing a cross-section of an aspect of the antireflection optical member according to the present invention in which the host medium in the metamaterial structure of the ultra-low refractive index layer is formed of the same material as that of the dielectric layer. In Fig. 14, the host medium 41 in a metamaterial structure of the ultra-low refractive index layer 4 is formed of the same material as the dielectric layer 5, and an interface having a clear shape is not necessarily provided between the ultra-low refractive index layer 4 and the dielectric layer 5. In Fig. 14, 10% of the guests having the bottom surface (point) which is close to the substrate and 10% of the guests having the top surface (point) which is distant from the substrate are excluded, and the remaining 80% of the guests 42 are shown. In Fig. 14, among the guests 42, guests 42 having the bottom surface (point) which is closest to the substrate 2 are guests 42 positioned on the left, the center, and the right of the paper plane of Fig. 14, and the bottom surfaces (points) of these guests 42 are positioned on "the interface between the ultra-low refractive index layer 4 and the substrate 2". In Fig. 14, a guest 42 having the top surface (point) which is most distant form the substrate 2 is a guest 42 positioned on the right of the paper plane of Fig. 14, and a position of a surface which

includes the top surface (point) of the guest 42 positioned on the right of the paper plane of Fig. 14 and is parallel to the substrate 2 is indicated by "the dotted line". The distance from "the dotted line" to "the interface between the ultra-low refractive index layer 4 and the substrate 2" is set as the physical thickness d2 of the ultra-low refractive index layer.

The positions of the guests in the metamaterial structure of the ultra-low refractive index layer are not particularly limited. For example, by manufacturing the metamaterial structure of the ultra-low refractive index layer using a lithography method, the guests can be positioned on a surface of the ultra-low refractive index layer on the substrate side. For example, by manufacturing the metamaterial structure of the ultra-low refractive index layer using a self-organization method, the guests can be positioned inside the ultra-low refractive index layer or on a surface of the ultra-low refractive index layer on a surface opposite to the substrate.

In the antireflection optical member according to the present invention, the real part n2 of the refractive index of the ultra-low refractive index layer satisfies n2<1, it is preferable that n2<0.9, and it is more preferable that n2<0.8. The real part n2 of the refractive index of the ultra-low refractive index layer is preferably 0.01 or higher, more preferably 0.5 or higher, and still more preferably 0.1 or higher.

In the antireflection optical member according to the present invention, from the viewpoint of preventing reflection from the substrate, the imaginary part k2 of the refractive index of the ultra-low refractive index layer is preferably 2 or lower, more preferably 1.5 or lower, and still more preferably 1.0 or lower.

In the antireflection optical member according to the present invention, the physical thickness d2 of the ultra-low refractive index layer satisfies the following Expression 1.

$$d2<\lambda/10 \ldots \qquad \text{Expression 1,}$$

It is more preferable that the physical thickness d2 of the ultra-low refractive index layer satisfies the following Expression 1A.

$$d2<\lambda/12 \ldots \qquad \text{Expression 1A}$$

It is still more preferable that the physical thickness d2 of the ultra-low refractive index layer satisfies the following Expression 1B.

$$d2<\lambda/15 \ldots \qquad \text{Expression 1B}$$

The ultra-low refractive index layer 4 is preferably a layer including a plurality of flat metal particles as the guests and more preferably a metal particle-containing layer in which the binder as the host medium includes a plurality of flat metal particles.

Hereinafter, a case where the ultra-low refractive index layer in the antireflection optical member according to the present invention is the metal particle-containing layer will be described as a representative example. However, the ultra-low refractive index layer in the antireflection optical member according to the present invention is not limited to the metal particle-containing layer.

Fig. 4 is an SEM image showing a plan view of the metal particle-containing layer. As shown in Fig. 4, it is preferable that the flat metal particles are dispersed and disposed independent of each other, and it is preferable that 50% or higher of the plurality of flat metal particles are disposed independent of each other in the metal particle-containing layer.

It is preferable that the flat metal particles do not overlap each other in the thickness direction and are disposed in a single layer.

(Flat Metal Particles)

It is preferable that the plurality of flat metal particles included in the metal particle-containing layer are flat particles having two principal planes opposite to each other. It is preferable that the flat metal particles are segregated on one surface of the metal particle-containing layer.

The material of the flat metal particles is not particularly limited and can be appropriately selected depending on the purpose. From the viewpoint that the reflectance of visible light is high, gold, silver, aluminum, copper, rhodium, nickel, or platinum is preferable, and silver is more preferable.

Examples of the shape of the principal planes of the flat metal particles include a hexagonal shape, a triangular

shape, and a circular shape. In particular, from the viewpoint that the visible transmittance is high, the shape of the principal planes is preferably a hexagonal or higher polygonal shape or a circular shape (the flat metal particles having a hexagonal shape or a circular shape), and more preferably a hexagonal shape shown in Fig. 5 or a circular shape shown in Fig. 6.

Two or more kinds of flat metal particles having a plurality of shapes among the above-described shapes may be used in combination.

In this specification, the circular shape refers to a shape in which the number of sides having a length of 50% or higher of an average equivalent circle diameter described below per one flat metal particle is 0. The flat metal particle having a circular shape is not particularly limited as long as it has no corners and has a round shape when observed with a transmission electron microscope (TEM) from above the principal planes.

In this specification, the hexagonal shape refers to a shape in which the number of sides having a length of 20% or higher of an average equivalent circle diameter described below per one flat metal particle is 6. The same shall be applied to other polygonal shapes. The flat metal particle having a hexagonal shape is not particularly limited as long as it has a hexagonal shape when observed with a transmission electron microscope (TEM) from above the principal planes, and can be appropriately selected. For example, the corners of the hexagonal shape may be acute or obtuse and is preferably acute from the viewpoint of reducing the absorption of light in the visible range. The degree of obtuseness of the angles is not particularly limited and can be appropriately selected depending on the purpose.

-Average Particle Size (Average Equivalent Circle Diameter) and Coefficient of Variation-

The equivalent circle diameter is expressed by the diameter of a circle having an area equivalent to the projected area of each particle. The projected area of each particle can be obtained using a well-known method of measuring the area of the particle using an electron microscope image and correcting the measured area using a magnification. In addition, the average particle size (average equivalent circle diameter) can be calculated by obtaining a particle size distribution from the statistics of the equivalent circle diameters D of 200 flat metal particles and calculating an arithmetic mean thereof. The coefficient of variation in the particle size distribution of the flat metal particles can be obtained as a value (%) obtained by dividing the standard deviation of the particle size distribution by the above-described average particle size (average equivalent circle diameter).

In the antireflection optical member, the coefficient of variation in the particle size distribution of the flat metal particles is preferably 35% or lower, more preferably 30% or lower, and still more preferably 20% or lower. It is preferable that the coefficient of variation is 35% or lower from the viewpoint of reducing the absorption of visible light in the antireflection structure.

The size of the flat metal particles is not particularly limited and can be appropriately selected depending on the purpose. The average particle size is preferably 10 to 500 nm, more preferably 20 to 300 nm, and still more preferably 50 to 200 nm.

-Aspect Ratio and Thickness of Flat Metal Particles-

In the antireflection optical member, the thickness T of the flat metal particles is preferably 20 nm or less, more preferably 2 to 15 nm, and still more preferably 4 to 12 nm.

The particle thickness T corresponds to the distance between the principal planes of the flat metal particles and are as shown in, for example, Figs. 5 and 6. The particle thickness T can be measured using an atomic force microscope (AFM) or a transmission electron microscope (TEM).

Examples of a method of measuring the average particle thickness using an AFM include a method including: dripping a particle dispersion including the flat metal particles on a glass substrate; drying the particle dispersion; and measuring the thickness of one particle.

Examples of a method of measuring the average particle thickness using a TEM include a method including: dripping a particle dispersion including the flat metal particles on a silicon substrate; drying the particle dispersion; covering the flat metal particles with carbon or metal by vapor deposition; preparing a cross-section specimen using focused ion beams (FIB); and observing the cross-section using a TEM to measure the thicknesses of the particles.

In the present invention, a ratio D/T (aspect ratio) of the average diameter (average equivalent circle diameter) D of the flat metal particles 20 to the average thickness T of the flat metal particles 20 is not particularly limited and can be appropriately selected depending on the purpose.

The ratio (aspect ratio) of the average diameter of the flat metal particles to the average thickness of the flat metal particles in the metal particle-containing layer is preferably 3 or more. In a case where the aspect ratio of the flat metal particles is 3 or higher, the absorption of light in the visible range can be suppressed, and the reflectance of reflected light which contributes to interference for exhibiting the antireflection function of light incident on the antireflection optical member can be increased.

In a case where light of visible light is incident on the laminate structure from the surface of the dielectric layer, in order for reflected light from the surface of the dielectric layer to interfere with reflected light from a dielectric layer-side interface of the metal particle-containing layer to cancel out the reflectance, the wavelength range of the reflected light from the dielectric layer-side interface of the metal particle-containing layer can be adjusted to overlap with the wavelength range of the incident light of visible light such that an antireflection optical member having a low reflectance can be provided. From this viewpoint, the aspect ratio of the flat metal particles is preferably 3 to 40 and more preferably 5 to 40.

From the viewpoint of reducing the absorption and haze of visible light, the aspect ratio of the flat metal particles is preferably 3 to 40 and more preferably 5 to 40. In a case where the aspect ratio is 3 or higher, the absorption of visible light can be suppressed. In a case where the aspect ratio is lower than 40, the haze in the visible range can also be suppressed.

Here, it is preferable that 60% or higher of all the flat metal particles which are dispersed and disposed in the binder satisfy an aspect ratio or 3 or higher.

Fig. 7 is a graph showing a simulation on the wavelength dependence of the transmittance in a case where the aspect ratio of the circular metal particles changes. An investigation was performed on the circular metal particles in a case where the thickness T was set to 10 nm and the diameter D was set to 80 nm, 120 nm, 160 nm, 200 nm, or 240 nm. As shown in Fig. 7, as the aspect ratio increases, the absorption peak (the bottom of the transmittance) is shifted to the long wavelength side. As the aspect ratio decreases, the absorption peak (the bottom of the transmittance) is shifted to the short wavelength side. As the aspect ratio is lower than 3, the absorption peak approaches the visible range. As the aspect ratio is 1, the absorption peak is in the visible range. This way, it is preferable that the aspect ratio is 3 or higher because the transmittance to visible light can be improved. It is more preferable that the aspect ratio is 5 or higher.

-Plane Orientation-

In the metal particle-containing layer, it is preferable that the principal planes of the flat metal particles are oriented in a range of 0° to 30° with respect to the surface of the metal particle-containing layer. That is, in Fig. 8, it is preferable that an angle ($\pm\theta$) between the surface of the metal particle-containing layer and a principal plane (plane which determines the equivalent circle diameter D) of a flat metal particle or an extended line of the principal plane is 0° to 30°. The principal planes of all the flat metal particles included in the metal particle-containing layer are not necessarily oriented in a range of 0° to 30° with respect to the surface of the metal particle-containing layer. The angle between the principal planes of the flat metal particles and the surface of the metal particle-containing layer is more preferably in a range of 0° to 20°, and still more preferably in a range of 0° to 10°. In a case where a cross-section of the antireflection optical member is observed, it is more preferable that the flat metal particles are oriented in a state where the tilt angle ($\pm\theta$) shown in Fig. 8 is small. In a case where $\theta$ is $\pm$30 or less, it is difficult to increase the absorption of visible light in the antireflection optical member.

In addition, the proportion of the flat metal particles having the main planes oriented in the range of the angle $\theta$ of 0° to $\pm$30° is preferably 50% or higher, more preferably 70% or higher, and still more preferably 90% or higher.

Whether or not the principal planes of the flat metal particles are oriented to one surface of the metal particle-containing layer can be determined using, for example, a method including: preparing a cross-section specimen; and observing and evaluating the metal particle-containing layer and the flat metal particles in the specimen. Specifically, in this method, a cross-section sample or a cross-section specimen sample of the antireflection optical member is prepared using a microtome or focused ion beams (FIB), and this sample is observed using various microscopes (for example, a field emission scanning electron microscope (FE-SEM) or a transmission electron microscope (TEM)) to obtain an image for the evaluation.

A method of observing the cross-section sample or the cross-section specimen sample prepared as described above is not particularly limited as long as whether or not the principal planes of the flat metal particles are oriented to one surface of the metal particle-containing layer in the sample can be determined. For example, a method using an FE-SEM, a TEM, or the like can be used. The cross-section sample may be observed using an FE-SEM, and the cross-section specimen sample may be observed using a TEM. In the evaluation using an FE-SEM, it is preferable that the FE-SEM has a spatial resolution in which the shape and the tilt angle ($\pm\theta$ in Fig. 8) of the flat metal particles can be clearly determined.

-Thickness of Metal Particle-Containing Layer and Range where Flat Metal Particles are Present-

Figs 9 and 10 are schematic cross-sectional views showing a state where the metal particle-containing layer including the flat metal particles is present in the antireflection optical member according to the present invention.

Regarding the thickness of the coating film of the metal particle-containing layer, as the thickness of the coating

film decreases, the plane orientation angle range of the flat metal particles is likely to be close to 0°, and the absorption of visible light can be reduced. Therefore, the thickness of the coating film of the metal particle-containing layer is preferably 100 nm or less, more preferably 3 to 50 nm, and still more preferably 5 to 40 nm.

In a case where a relationship between the thickness d of the coating film of the metal particle-containing layer and the average equivalent circle diameter D of the flat metal particles satisfies d>D/2, it is preferable that 80% by number or higher of the flat metal particles are present in a range from the surface of the metal particle-containing layer to d/2, it is more preferable that 80% by number or higher of the flat metal particles are present in a range from the surface of the metal particle-containing layer to d/3, and it is still more preferable that 60% by number or higher of the flat metal particles are exposed to one surface of the metal particle-containing layer. The flat metal particles being present in a range from the surface of the metal particle-containing layer to d/2 represents that at least some of the flat metal particles are present in a range from the surface of the metal particle-containing layer to d/2. Fig. 9 is a schematic diagram in which the thickness d of the metal particle-containing layer satisfies d>D/2. In Fig. 9, in particular, 80% by number of the flat metal particles are present in a range f, and f<d/2.

In addition, the flat metal particles being exposed to one surface of the metal particle-containing layer represents that a part of surfaces of some of the flat metal particles is positioned at the dielectric layer-side interface of the metal particle-containing layer. Fig. 10 is a diagram showing a case where surfaces of some of the flat metal particles match with the dielectric layer-side interface.

Here, the flat metal particle presence distribution in the metal particle-containing layer can be measured, for example, from an image obtained by observing a cross-section of the antireflection optical member with an SEM.

The relationship between the thickness d of the coating film of the metal particle-containing layer and the average equivalent circle diameter D of the flat metal particles satisfies preferably d<D/2, more preferably d<D/4, and still more preferably d<D/8. It is preferable that the thickness of the coating film of the metal particle-containing layer is small as possible because the plane orientation angle range of the flat metal particles is likely to be close to 0°, and the absorption of visible light can be reduced.

The plasmon resonance wavelength $\lambda$ (absorption peak wavelength in Fig. 7) of the flat metal particles in the metal particle-containing layer is preferably longer than the wavelength at which reflection is to be prevented, and can be appropriately selected depending on the purpose. From the viewpoint of reducing the absorption and haze of visible light, the plasmon resonance wavelength $\lambda$ is more preferably 700 nm to 2500 nm.

-Area Ratio of Flat Metal Particles-

When seen from a direction perpendicular to the metal particle-containing layer, an area ratio [(B/A)×100] of the sum B of the areas of the flat metal particles to the total projected area A of the metal particle-containing layer is preferably 5% to 70% and more preferably 5% to 40% from the viewpoints of suppressing the absorption of light in the visible range and sufficiently increasing the reflectance of reflected light which contributes to interference for exhibiting the antireflection function of light incident on the antireflection optical member.

In addition, by adjusting the area ratio to be 10% or higher and 40% or lower, the absorption of light in the visible range can be further suppressed, and the reflectance and transmittance of reflected light which contributes to interference for exhibiting the antireflection function of light incident on the antireflection optical member can be further increased.

Here, the area ratio can be measured, for example, by processing an image which is obtained by observing the antireflection optical member with an SEM or an atomic force microscope (AFM) from above.

-Disposition of Flat Metal Particles-

It is preferable that the disposition of the flat metal particles in the metal particle-containing layer is uniform. The uniform disposition described herein represents that, in a case where the distance (inter-adjacent-particle distance) between one flat metal particle to another flat metal particle which is most adjacent thereto is converted into a numerical value in terms of the distance between the centers of the flat metal particle, the coefficient of variation (=standard deviation÷average value) in the inter-adjacent-particle distances of the respective flat metal particles is low. It is preferable that the coefficient of variation in the inter-adjacent-particle distances is as low as possible. The coefficient of variation is preferably 30% or lower, more preferably 20% or lower, still more preferably 10% or lower, and ideally 0%. It is preferable that the coefficient of variation in the inter-adjacent-particle distances is sufficiently low because the sparse or dense disposition of the flat metal particles in the metal particle-containing layer or the aggregation between the particles is not likely to occur, and the haze tends to be improved. The inter-adjacent-particle distance can be measured by observing a coating surface of the metal particle-containing layer with an SEM or the like.

In addition, the boundary between the metal particle-containing layer and the dielectric layer can also be determined by observation using an SEM or the like, and the thickness d of the metal particle-containing layer can be

determined. Even in a case where the dielectric layer is formed on the metal particle-containing layer using the same binder as the binder included in the metal particle-containing layer, typically, the boundary between the metal particle-containing layer and the dielectric layer can be determined based on an image obtained by SEM observation, and the thickness of the metal particle-containing layer can be determined. In a case where the boundary is not clear, a surface of a flat metal particle which is most distant from the substrate can be determined as the boundary.

-Method of Synthesizing Flat Metal Particles-

A method of synthesizing the flat metal particles is not particularly limited and can be appropriately selected depending on the purpose. Examples of a method of synthesizing the flat metal particles having a hexagonal shape or a circular shape include a liquid phase method such as a chemical reduction method, a photochemical reduction method, or an electrochemical reduction method. Among these, a liquid phase method such as a chemical reduction method or a photochemical reduction method is more preferable from the viewpoint of controlling the shape and the size. In a case where the flat metal particles are flat silver particles (also called silver nanodisks), the flat metal particles having a hexagonal shape or circular shape may be obtained by synthesizing flat silver particles having a hexagonal or triangular shape and then etching the flat silver particle with, for example, a dissolution species for dissolving silver such as nitric acid or sodium sulfite or etching the flat silver particle by heating to make corners of the flat metal particles having a hexagonal to triangular shape obtuse.

In a case where the flat metal particles are flat silver particles, as a method of synthesizing the flat metal particles, a method of fixing a seed crystal to a surface of a substrate such as a film or glass in advance and allowing silver crystals to grow in a flat shape may be adopted.

In the antireflection optical member, additional treatments may be performed on the flat metal particles in order to impart desired properties. Examples of the additional treatments include the formation of a high refractive index shell layer and addition of various additives such as a dispersant or an antioxidant.

(Binder)

Hereinafter, a preferable material of the host medium of the ultra-low refractive index layer will be described using an example in which the ultra-low refractive index layer is the metal particle-containing layer.

In the metal particle-containing layer, it is preferable that the binder includes a polymer, and it is more preferable that the binder includes a transparent polymer. Examples of the polymer include a polyvinyl acetal resin, a polyvinyl alcohol resin, a polyvinyl butyral resin, a polyacrylate resin, a polymethyl methacrylate resin, a polycarbonate resin, a polyvinyl chloride resin, a (saturated) polyester resin, a polyurethane resin, a natural polymer such as gelatin or cellulose. Among these, the main polymer is preferably a polyvinyl alcohol resin, a polyvinyl butyral resin, a polyvinyl chloride resin, a (saturated) polyester resin, or a polyurethane resin and more preferably a polyester resin or a polyurethane resin from the viewpoint of causing 80% by number or higher of the flat metal particles to be present in a range from the surface of the metal particle-containing layer to d/2.

As the binder, two or more kinds may be used in combination.

From the viewpoint of imparting excellent weather fastness, it is more preferable that the polyester resin is a saturated polyester resin because the saturated polyester resin has no double bond. In addition, from the viewpoint of obtaining high hardness, durability, and heat resistance by curing with a water-soluble or water-dispersible curing agent, it is more preferable that the polymer has a hydroxyl group or a carboxyl group at a molecular terminal.

As the polymer, a commercially available product can be preferably used, and examples thereof include PLASCOAT Z-687 which is a water-soluble polyester resin manufactured by Goo Chemical Co., Ltd. and HYDRAN HW-350 which is a polyurethane aqueous solution manufactured by DIC Corporation.

In addition, in this specification, the main polymer included in the metal particle-containing layer refers to a polymer component which accounts for 50 mass% or higher of the polymer included in the metal particle-containing layer.

The content of the polyester resin and the polyurethane resin is preferably 1 to 10000 mass%, more preferably 10 to 1000 mass%, and still more preferably 20 to 500 mass% with respect to the flat metal particles included in the metal particle-containing layer.

It is preferable that a refractive index n of the binder is preferably 1.4 to 1.7.

(Other Additives)

In a case where the metal particle-containing layer includes the polymer and the main polymer is the polyester resin, it is preferable that a crosslinking agent is added from the viewpoint of the film hardness.

In addition, in a case where the metal particle-containing layer includes the polymer, it is preferable that a surfactant is added from the viewpoint of suppressing cissing to obtain a layer having an excellent surface.

As the crosslinking agent or the surfactant, for example, a material described in paragraph "0066" of JP2014-194446A can be used.

An antioxidant such as mercaptotetrazole or ascorbic acid may be adsorbed on the flat metal particles in the metal particle-containing layer in order to prevent oxidation of a metal such as silver constituting the flat metal particles. In addition, in order to prevent oxidation, a sacrificial oxide layer formed of Ni or the like may be formed on surfaces of the flat metal particles. In addition, in order to block oxygen, a metal oxide film formed of $SiO_2$ or the like may be formed.

In order to impart dispersibility, a dispersant such as a low molecular weight dispersant or a high molecular weight dispersant including at least one of N, S, or P, for example, a quaternary ammonium salt or an amine may be added to the flat metal particles in the metal particle-containing layer.

It is preferable that the flat metal particle dispersion includes a preservative from the viewpoint of improving the visible transmittance while maintaining the antireflection function. The function of the preservative and examples of the preservative can be found in paragraphs "0073" to "0090" of JP2014-184688A.

In the present invention, it is preferable that an antifoaming agent is used in a step of preparing or redispersing the flat metal particles. The function of the antifoaming agent and examples of the antifoaming agent can be found in paragraphs "0091" and "0092" of JP2014-184688A.

<Dielectric Layer>

The antireflection optical member according to the present invention includes:

a laminate structure including a dielectric layer, an ultra-low refractive index layer, and the substrate that are laminated in this order,
in which the dielectric layer satisfies the following Expression 2,

$$M-\lambda/8<n1\times d1<M+\lambda/8 \quad \ldots \quad \text{Expression 2,}$$

$$M=(4m+1)\times\lambda/8 \quad \ldots \quad \text{Expression 3,}$$

where d1 represents a physical thickness of the dielectric layer, n1 represents a real part of a refractive index of the dielectric layer, and m represents an integer of 0 or more.

In the antireflection optical member according to the present invention, it is preferable that the dielectric layer is an outermost layer. In a case where the dielectric layer is the outermost layer, a layer having a thickness which has no effect on optical characteristics may be present on a surface of the dielectric layer opposite to the ultra-low refractive index layer. The layer having a thickness which has no effect on optical characteristics refers to a layer having a thickness which is 1/50 or less of the wavelength λ of the light whose reflection is to be prevented. The layer having a thickness which has no effect on optical characteristics refers to a layer having a thickness which is 1/100 or less of the wavelength λ of the light whose reflection is to be prevented. Examples of the layer which has no effect on optical characteristics include an antifouling layer having a thickness of 1 nm.

In a case where the dielectric layer is the outermost layer, the external environment of the dielectric layer may be air, a vacuum, or another medium such as gas in which the proportion of nitrogen is higher than that of air. It is preferable that the external environment of the dielectric layer is air.

It is preferable that the optical thickness of the dielectric layer ($n1\times d1$; also referred to as an optical path length) is a thickness which can prevent reflection from the substrate. Here, preventing reflection from the substrate represents reducing reflected light and is not limited to completely eliminating reflected light.

Specifically, in the antireflection optical member according to the present invention, the dielectric layer satisfies the following Expression 2,

$$M-\lambda/8<n1\times d1<M+\lambda/8 \quad \ldots \quad \text{Expression 2,}$$

$$M=(4m+1)\times\lambda/8 \quad \ldots \quad \text{Expression 3,}$$

where d1 represents a physical thickness of the dielectric layer, n1 represents a real part of a refractive index of the

dielectric layer, and m represents an integer of 0 or more.

In principle, it is optimal that the optical thickness of the dielectric layer 5 is "optical path length $(4m+1)\times\lambda/8$". However, since the optimal value changes depending on conditions of the metal particle-containing layer in a range of $\lambda/16$ to $\lambda/4$, the optical thickness can be appropriately set depending on the layer configuration.

It is more preferable that the dielectric layer satisfies the following Expression 2A.

$$M-\lambda/12<n1\times d1<M+\lambda/12 \quad ... \qquad \text{Expression 2A}$$

It is still more preferable that the dielectric layer satisfies the following Expression 2B.

$$M-\lambda/16<n1\times d1<M+\lambda/16 \quad ... \qquad \text{Expression 2A}$$

Specifically, it is preferable that the physical thickness d1 of the dielectric layer 5 is 400 nm or less. In a case where the wavelength of the incident light is represented by λ nm, it is more preferable that the optical path length is λ/4 or less. The optical path length changes depending on the refractive index of the dielectric layer and may be appropriately set depending on the material of the dielectric layer.

In a case where the thickness of the dielectric layer 5 varies depending on the positions, the average physical thickness of the dielectric layer 5 is set as d1. In a case where the thickness of the dielectric layer 5 varies depending on the positions, a method of determining the physical thickness d1 of the dielectric layer 5 will be described with reference to Fig. 16. Fig. 16 is a schematic diagram showing a cross-section of another aspect of the antireflection optical member according to the present invention in which the host medium in the metamaterial structure of the ultra-low refractive index layer is formed of the same material as the dielectric layer. A position of a surface which includes the top surface (point) of the guest 42 positioned on the right of the paper plane of Fig. 16 and is parallel to the substrate 2 is indicated by "the dotted line" (as in Fig. 14). In Fig. 16, the distance from "the dotted line" to "the interface between the ultra-low refractive index layer 4 and the substrate 2" is set as the physical thickness d2 of the ultra-low refractive index layer (as in Fig. 14). The distances from the respective positions on "the dotted line" shown in Fig. 16 to a surface (in the upward direction on the paper plane) of the dielectric layer 5 opposite to the ultra-low refractive index layer are obtained as the thicknesses of the respective positions of the dielectric layer 5. The average value of the thicknesses of the respective positions of the dielectric layer 5 is obtained as the physical thickness d1 of the dielectric layer. In Fig. 16, "the chain line" is drawn such that the distance between "the dotted line" and "the chain line" is the physical thickness d1 of the dielectric layer.

In a case where the thickness of the dielectric layer 5 varies depending on the positions, the surface of the dielectric layer 5 opposite to the ultra-low refractive index layer may have a shape conforming with the positions of the guests 42 as shown in Fig. 16. In a case where the surface of the dielectric layer 5 opposite to the ultra-low refractive index layer has a shape conforming with the positions of the guests 42, the shape may be a rectangular shape whose thickness intermittently changes or a wavy shape whose thickness continuously changes, and is preferably a wavy shape.

The real part n1 of the refractive index of the dielectric layer 5 is not particularly limited and is preferably lower than or equal to the refractive index of the substrate 2 from the viewpoint of reducing reflected light as a whole.

Specifically, the real part n1 of the refractive index of the dielectric layer 5 is preferably 1.2 to 2.0.

From the viewpoint of reducing the absorption and increasing the transmittance, the imaginary part k1 of the refractive index of the dielectric layer 5 is preferably 0.3 or lower, more preferably 0.1 or lower, and still more preferably 0.

The material for forming the dielectric layer 5 is not particularly limited. The dielectric layer is, for example, a layer which cures a composition including a thermoplastic polymer, a thermosetting polymer, an energy radiation-curable polymer, or an energy radiation-curable monomer by thermal drying or energy radiation irradiation, and examples thereof include a layer in which low refractive index particles having a low refractive index are dispersed in a binder, a layer in which low refractive index particles having a low refractive index are copolymerized or crosslinked with a monomer and a polymerization initiator, and a layer including a binder having a low refractive index.

Although not particularly limited, examples of the energy radiation-curable polymer include UNIDIC EKS-675 (an ultraviolet-curable resin manufactured by DIC Corporation). The energy radiation-curable polymer is not particularly limited and, for example, a fluorine-containing polyfunctional monomer described below is preferable.

(Fluorine-Containing Polyfunctional Monomer)

The composition used for providing the dielectric layer may include a fluorine-containing polyfunctional monomer. The fluorine-containing polyfunctional monomer is a fluorine-containing compound including an atomic group and

three or more polymerizable groups, the atomic group (hereinafter, also referred to as "fluorine containing core portion") includes a plurality of fluorine atoms and a carbon atom as major component (may further include an oxygen atom and/or a hydrogen atom) and substantially does not contribute to polymerization, and the polymerizable groups are radially polymerizable, cationically polymerizable or polycondensable through a linking group such as an ester bond or an ether bond. The number of the polymerizable groups included in the fluorine-containing polyfunctional monomer is preferably 5 or more, and more preferably 6 or more.

Further, the fluorine content in the fluorine-containing polyfunctional monomer is preferably 35 mass% or higher, more preferably 40 mass% or higher, and still more preferably 45 mass% or higher with respect to the amount of the fluorine-containing polyfunctional monomer. It is preferable that the fluorine content in the fluorine compound is 35 mass% or higher because the refractive index of the polymer can be reduced, and the average reflectance of the coating film can be reduced.

The fluorine-containing polyfunctional monomer having three or more polymerizable groups may be a crosslinking agent having polymerizable groups as crosslinking groups.

As the fluorine-containing polyfunctional monomer, two or more kinds may be used in combination.

Preferable examples of the fluorine-containing polyfunctional monomer are shown below, but the present invention is not limited thereto.

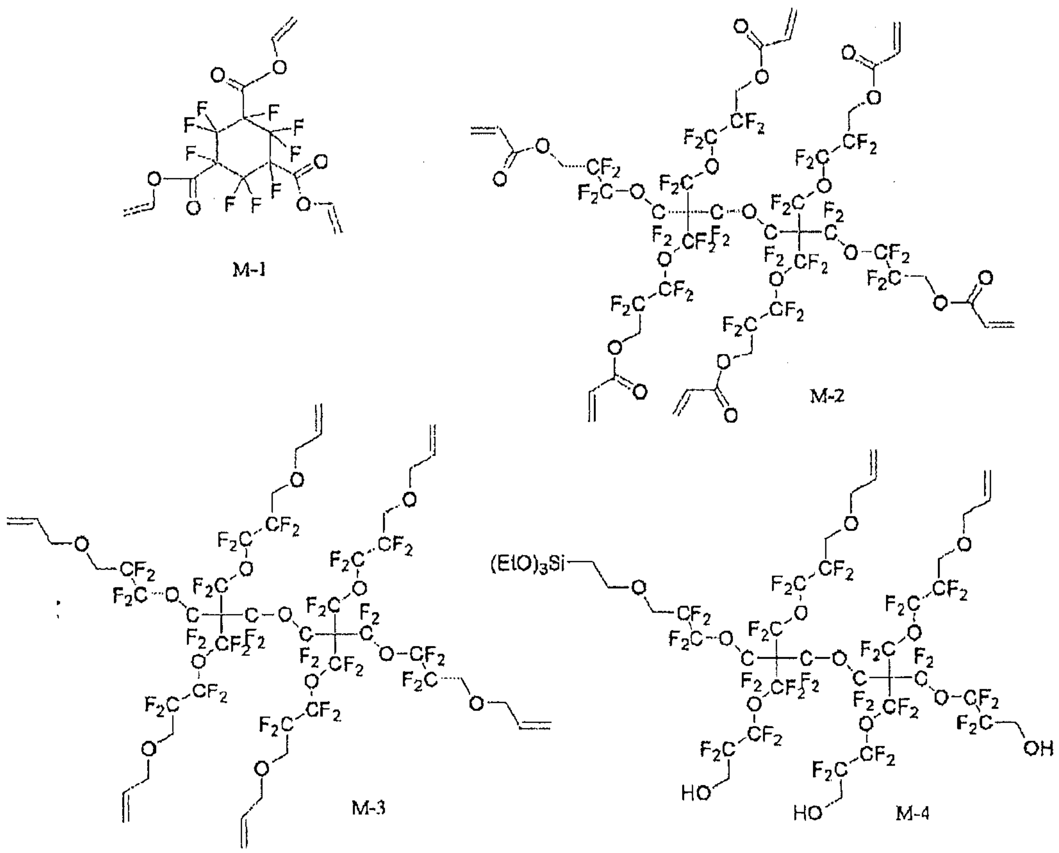

M-1

M-2

M-3

M-4

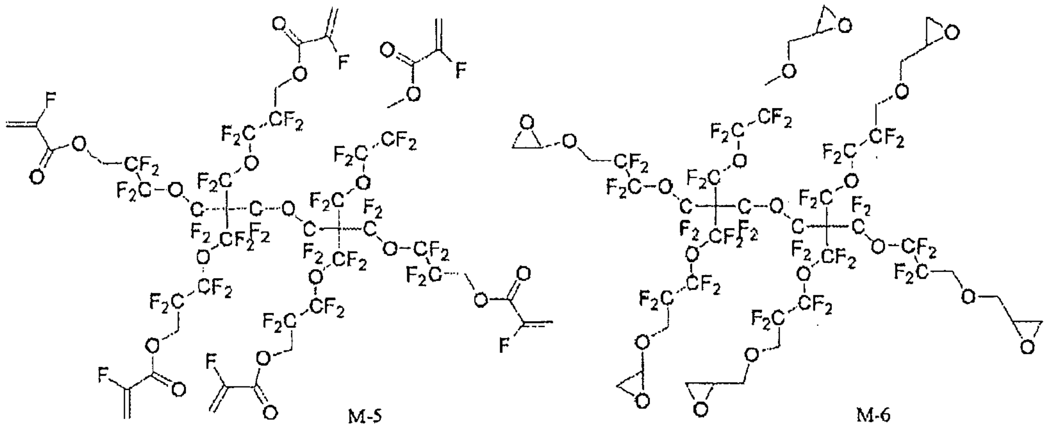

M-5

M-6

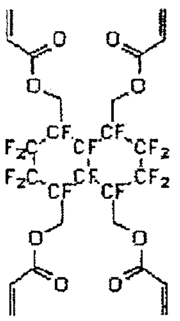

M-7

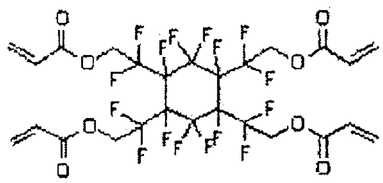

M-8

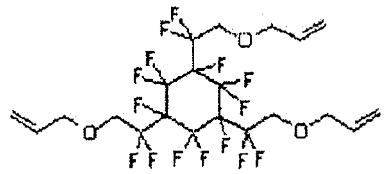

M-9

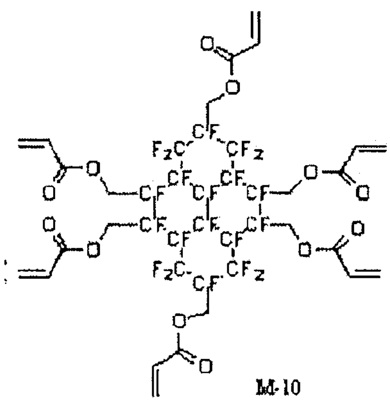

M-10

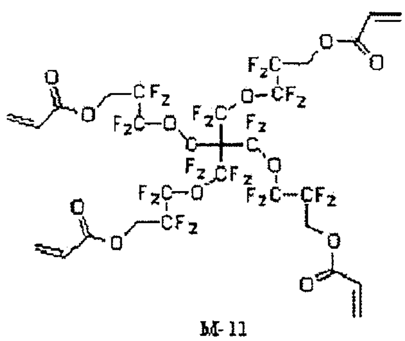

M-11

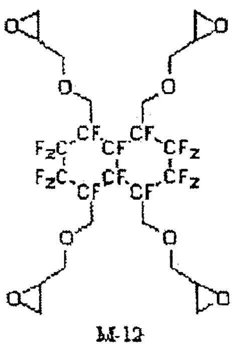

M-12

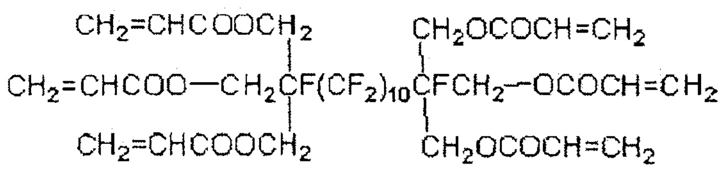

M-13

The fluorine contents of M-1 to M-13 are 37.5 mass%, 46.2 mass%, 48.6 mass%, 47.7 mass%, 49.8 mass%, 45.8 mass%, 36.6 mass%, 39.8 mass%, 44.0 mass%, 35.1 mass%, 44.9 mass%, 36.2 mass%, and 39.0 mass%,

respectively.

(Fluorine-Containing Polymer)

The fluorine-containing polyfunctional monomer can be polymerized using various polymerization methods to be used as a fluorine-containing polymer (polymer). During the polymerization, homopolymerization or copolymerization may be performed, and the fluorine-containing polymer may be used as a crosslinking agent.

The fluorine-containing polymer may be synthesized from a plurality of monomers. As the fluorine-containing polymer, two or more kinds may be used in combination.

Examples of a solvent used include ethyl acetate, butyl acetate, acetone, methyl ethyl ketone, methyl isobutyl ketone, cyclohexanone, tetrahydrofuran, dioxane, N,N-dimethylformamide, N,N-dimethylacetamide, benzene, toluene, acetonitrile, methylene chloride, chloroform, dichloroethane, methanol, ethanol, 1-propanol, 2-propanol, 1-butanol. Among these, one kind may be used alone, or two or more kinds may be used in combination.

As the radical polymerization initiator, either a compound which generates a radical due to the action of heat or a compound which generates a radical due to the action of light can be used.

The examples of the compound which initiates radical polymerization due to the action of heat can be found in paragraph "0136" of JP2013-254183A.

The examples of the compound (photoradical polymerization initiator) which initiates radical polymerization due to the action of light can be found in paragraph "0137" of JP2013-254183A.

The addition amount of the radical polymerization initiator is not particularly limited as long as the polymerization reaction of a radical reactive group can be initiated. In general, the addition amount of the radical polymerization initiator is preferably 0.1 to 15 mass%, more preferably 0.5 to 10 mass%, and still more preferably 2 to 5 mass% with respect to the total solid content of the curable resin composition.

As the radical polymerization initiator, two or more kinds may be used in combination. In this case, it is preferable that the total amount of the radical polymerization initiator is in the above-described range.

The polymerization temperature is not particularly limited and can be appropriately adjusted depending on the kind of the initiator. In addition, in a case where the photoradical polymerization initiator is used, heating is not necessary but may be performed.

In addition to the above-described components, the curable resin composition for forming the fluorine-containing polymer may further include various additives from the viewpoint of film hardness, refractive index, antifouling properties, water fastness, chemical resistance, and lubricating properties. For example, inorganic oxide fine particles such as (hollow) silica, a silicone or fluorine antifouling agent, or a lubricant can be added. In a case where these additives are added, the addition amount of the additives is preferably 0 to 30 mass%, more preferably 0 to 20 mass%, and still more preferably 0 to 10 mass% with respect to the total solid content of the curable resin composition.

<Second Dielectric Layer>

In the antireflection optical member according to the present invention, the second dielectric layer may be provided between the substrate and the ultra-low refractive index layer. By providing the second dielectric layer, the antireflection effect can be further improved.

The kind of the second dielectric layer and a method of forming the second dielectric layer are not particularly limited and can be selected depending on the purpose. A material for forming the second dielectric layer can also be selected from the materials described above as the examples of the material for forming the dielectric layer.

The real part of the refractive index of the second dielectric layer is not particularly limited and is preferably higher than or equal to the refractive index of the substrate 2 from the viewpoint of reducing reflected light as a whole.

The physical thickness of the second dielectric layer is not particularly limited and can be selected depending on the purpose, and is preferably $1/5\times\lambda$ or lower in order to obtain the antireflection effect over a wide range.

<Hard Coat Layer>

In order to impart scratch resistance, it is also preferable that a hard coat layer having hard coating properties is provided between the substrate and the ultra-low refractive index layer. The hard coat layer may include metal oxide particles or an ultraviolet absorber.

The kind of the hard coat layer and a method of forming the hard coat layer are not particularly limited and can be selected depending on the purpose. Examples of a material for forming the hard coating layer include a thermally curable or photocurable resin such as an acrylic resin, a silicone resin, a melamine resin, a urethane resin, an alkyd resin, or a fluororesin. The thickness of the hard coat layer is not particularly limited and can be appropriately selected depending on the purpose, and is preferably 1 μm to 50 μm.

<Pressure Sensitive Adhesive Layer>

In a case where a glass plate is adhered to the antireflection optical member, it is preferable that a pressure sensitive adhesive layer is formed on a back surface of the substrate 2 of the antireflection optical member.
This pressure sensitive adhesive layer may include an ultraviolet absorber.
A material used for forming the pressure sensitive adhesive layer is not particularly limited and can be appropriately selected depending on the purpose, and examples thereof include a polyvinyl butyral (PVB) resin, an acrylic resin, a styrene/acrylic resin, a urethane resin, a polyester resin, and a silicone resin. Among these curing agents, one kind may be used alone, or two or more kinds may be used in combination. The pressure sensitive adhesive layer formed of the above-described material can be formed by coating or laminating.
Further, for example, an antistatic agent, a lubricant, or an anti-blocking agent may be added to the pressure sensitive adhesive layer.
The thickness of the pressure sensitive adhesive layer is preferably 0.1 μm to 10 μm.

<Other Layers and Components>

The antireflection optical member according to the present invention may include layers other than the above-described layers. For example, the antireflection optical member may include an infrared absorbing compound-containing layer, or an ultraviolet absorber-containing layer.

(Ultraviolet Absorber)

It is preferable that the antireflection optical member according to the present invention includes a layer including an ultraviolet absorber.
The layer including an ultraviolet absorber can be appropriately selected depending on the purpose, and the details thereof can be found in paragraphs "0148" to "0155" of JP2014-184688A.

(Metal Oxide Particles)

In order to shield heat rays, the antireflection optical member may include at least one kind of metal oxide particles.
A material of the metal oxide particles is not particularly limited and can be appropriately selected depending on the purpose, and examples thereof include tin-doped indium oxide (hereinafter, abbreviated as "ITO"), antimony-doped tin oxide (hereinafter, abbreviated as "ATO"), zinc oxide, antimony zinc oxide, titanium oxide, indium oxide, tin oxide, antimony oxide, glass ceramic, lanthanum hexaboride ($LaB_6$), and cesium tungsten oxide (Cs0.33WO3, hereinafter abbreviated as "CWO"). Among these, ITO, ATO, CWO, or lanthanum hexaboride ($LaB_6$) is more preferable from the viewpoint that the antireflection structure, which has an excellent heat ray absorbing ability and exhibits a wider heat ray absorbing ability when used in combination with the flat metal particles, can be manufactured, and ITO is still more preferable from the viewpoint of shielding 90% or higher of infrared light having a wavelength of 1200 nm or longer and exhibiting a visible transmittance of 90% or higher.
The volume average particle size of primary particles of the metal oxide particles is preferably 0.1 μm or less from the viewpoint of preventing a decrease in the visible transmittance.
The shape of the metal oxide particles is not particularly limited and can be appropriately selected depending on the purpose, and examples thereof include a spherical shape, a needle shape, and a plate shape.

<Method of Manufacturing Antireflection Optical Member>

Next, a method of forming the respective layers will be described.

(Method of Forming Ultra-Low Refractive Index Layer)

A method of forming the ultra-low refractive index layer is not particularly limited.
In the antireflection optical member according to the present invention, it is preferable that the metamaterial structure of the ultra-low refractive index layer is manufactured using a lithography method. Examples of the manufacturing method using a lithography method include an electron beam lithography method, a photolithography method, a thermal lithography method, and a nanoimprint lithography method, Among these, an electron beam lithography method is preferable. An example of specific steps of the manufacturing method using a lithography method is as follows. First, a resist is formed on a surface of an arbitrary lower layer such as the substrate using an arbitrary method such as coating,

and a resist pattern corresponding to desired guest positions is formed using a lithography method. Next, a guest material is laminated on the entire surface including a portion of the substrate, which corresponds to a portion where the resist pattern is not formed, and the resist pattern using an arbitrary method such as sputtering or vapor deposition. Next, the resist pattern is removed using an arbitrary method such as a lift-off method, and the guests are disposed at arbitrary positions. At this time, the host medium laminated on the guests may be selectively removed using a method such as etching. Next, the ultra-low refractive index layer is formed using an arbitrary method such as sputtering, vapor deposition, or coating. By using the same material as the host medium, the ultra-low refractive index layer can also be continuously formed.

In addition, in the antireflection optical member according to the present invention, it is preferable that the metamaterial structure is manufactured using a self-organization method. Examples of the manufacturing method using a self-organization method include a method of applying a dispersion (flat metal particle dispersion) including the flat metal particles to a surface of an arbitrary lower layer such as the substrate using a dip coater, a die coater, a slit coater, a bar coater, a gravure coater, or the like, and then orienting the planes of the flat metal particles using a self-organization method.

Examples of a method of orienting the planes of the guests of the metamaterial structure include an LB film method and a spray coating method.

In order to promote the plane orientation, the flat metal particles may pass through a pressure roller such as a calender roller or a laminating roller.

(Method of Forming Dielectric Layer)

It is preferable that the dielectric layer 5 and the second dielectric layer 6 are formed by coating. At this time, the coating method is not particularly limited, and a well-known method can be used. For example, a method of applying a dispersion including an ultraviolet absorber using a dip coater, a die coater, a slit coater, a bar coater, a gravure coater, or the like can be used.

(Method of Forming Hard Coat Layer)

It is preferable that the hard coat layer is formed by coating. At this time, the coating method is not particularly limited, and a well-known method can be used. For example, a method of applying a dispersion including an ultraviolet absorber using a dip coater, a die coater, a slit coater, a bar coater, a gravure coater, or the like can be used.

(Method of Forming Pressure Sensitive Adhesive Layer)

It is preferable that the pressure sensitive adhesive layer is formed by coating. For example, the pressure sensitive adhesive layer can be laminated on a surface of a lower layer such as the substrate, the metal particle-containing layer, or the ultraviolet absorbing layer. At this time, the coating method is not particularly limited, and a well-known method can be used.

A pressure sensitive adhesive is applied to a release film and dried to prepare a film, and the pressure sensitive adhesive surface of the prepared film and a surface of the antireflection structure according to the present invention are laminated. As a result, the pressure sensitive adhesive layer can be laminated while maintaining the dry state. At this time, the laminating method is not particularly limited, and a well-known method can be used.

<Functional Glass>

It is preferable that the antireflection optical member is adhered to glass (preferably a glass plate). Hereinafter, the glass to which the antireflection optical member according to the present invention is adhered will also be referred to as "functional glass".

It is preferable that the antireflection optical member is adhered to at least one surface of the glass plate having functionality, and it is more preferable that the antireflection optical member is adhered to front and back surfaces of the glass plate having functionality. Regarding the functional glass used for window glass, it is necessary that: 1) the visible transmittance of one surface is high (substantially 80% or higher) and the visual field is clear; and 2) the electric wave transmission is high and there is no interference with electric waves of a mobile phone. In a preferable aspect of the antireflection optical member according to the present invention, the above-described two requirements can be satisfied.

Here, it is preferable that the glass plate is glass used for a window of a building, a show window, or a car window.

The functional glass includes the antireflection optical member according to the present invention. Therefore, the reflectance is low in a wide range of visible light. In addition, it is preferable that the functional glass has electric wave transmission. In this preferable aspect, the electric waves of a mobile phone or the like can transmit through the

functional glass. Therefore, the functional glass can be preferably used for a window glass of a building, a show window, a car window, or the like.

<Method of Preparing Functional Glass>

The details of a case where the functionality is imparted to a window glass or the like using the antireflection optical member according to the present invention can be found in paragraph "0169" of JP2014-184688A.
The imparting of the functionality to a window glass can also be achieved using a heating or pressure laminating method in which the antireflection optical member according to the present invention is mechanically adhered to the glass plate using a laminating device. The details of the heating or pressure laminating method can be found in paragraph "0169" of JP2014-184688A.

[Examples]

Hereinafter, the present invention will be described in detail using Examples.
Materials, used amounts, ratios, treatment details, treatment procedures, and the like shown in the following examples can be appropriately changed within a range not departing from the scope of the present invention. Accordingly, the scope of the present invention is not limited to the following specific examples.

[Examples 1-1 to 1-8 and Comparative Examples 1-1 to 1-5]

Regarding the antireflection optical member according to each of Examples and Comparative Examples having the layer configuration (substrate/ultra-low refractive index layer/dielectric layer) shown in Fig. 3, the wavelength $\lambda$ (designed wavelength) of the light whose reflection was to be prevented, the real part n1 and the imaginary part k1 of the refractive index of the dielectric layer, the physical thickness d1 of the dielectric layer, the real part n2 and the imaginary part k2 of the refractive index of the ultra-low refractive index layer, the physical thickness d2 of the ultra-low refractive index layer, the refractive index n3 of the substrate were set as shown in Table 1 using a multi-layer film simulation software "Essential Macleod" (manufactured by Thin Film Center Inc.). Under these conditions, the reflectance of the antireflection optical member according to each of the Examples and the Comparative Examples was calculated.

<Verification of Dependence on Physical Thickness d2 of Ultra-Low Refractive Index Layer>

Regarding the antireflection optical member according to each of the Examples and the Comparative Examples, the physical thickness d1 of the dielectric layer was optimized such that the reflectance of the antireflection optical member at a wavelength of 550 nm was the minimum depending on the physical thickness d2 of the ultra-low refractive index layer.

<Evaluation of Reflectance>

The reflectance of the antireflection optical member according to each of the Examples and the Comparative Examples was evaluated based on the following standards in a case where the reflectance of the substrate at the wavelength $\lambda$ of the light whose reflection was to be prevented was 4%.

A: The reflectance of the antireflection optical member according to each of the Examples and the Comparative Examples at the wavelength $\lambda$ of the light whose reflection from the substrate was to be prevented was lower than half of the reflectance of the substrate
B: The reflectance of the antireflection optical member according to each of the Examples and the Comparative Examples at the wavelength $\lambda$ of the light whose reflection from the substrate was to be prevented was half of the reflectance of the substrate or higher and lower than the reflectance of the substrate
C: The reflectance of the antireflection optical member according to each of the Examples and the Comparative Examples at the wavelength $\lambda$ of the light whose reflection from the substrate was to be prevented was higher than the reflectance of the substrate

The results are collectively shown in Table 1 below.
In the table of this specification, M represents "$(4m+1)\times\lambda/8$". In the column "m=0 Expression 2" of the table, "Y" represents that the antireflection optical member satisfied Expression 2 in a case where m=0, and "N" represents that the antireflection optical member did not satisfy Expression 2 in a case where m=0. In the column "m=1 Expression 2", "Y" represents that the antireflection optical member satisfied Expression 2 in a case where m=1, and "N" represents

that the antireflection optical member did not satisfy Expression 2 in a case where m=1. In the column "Expression 1", "Y" represents that the antireflection optical member satisfied Expression 1, and "N" represents that the antireflection optical member did not satisfy Expression 1.

It was found from Examples 1-1 to 1-8 that, in a case where the antireflection optical member satisfies Expression 1, that is, the physical thickness d2 of the ultra-low refractive index layer is less than λ/10, the physical thickness d1 of the dielectric layer is optimized and thus the antireflection effect can be obtained. It was also found that, in a case where the physical thickness d2 of the ultra-low refractive index layer satisfies Expression 1 but does not satisfy the following Expression 1A, the effects deteriorate (Evaluation: B).

$$d2<\lambda/12 \ldots \qquad \text{Expression 1A}$$

In addition, Fig. 11 shows a relationship between a physical thickness d2 of the ultra-low refractive index layer and the reflectance of the antireflection optical member according to each of Examples 1-1 to 1-8 and Comparative Examples 1. It was found from Fig. 11 that, as the physical thickness d2 of the ultra-low refractive index layer approaches the value of "M=(4m+1)×λ/8", the reflectance of the antireflection optical member can be reduced.

On the other hand, it was found from Comparative Examples 1-1 to 1-5 that, in a case where the antireflection optical member does not satisfy Expression 1, that is, the physical thickness d2 of the ultra-low refractive index layer is λ/10 or more, the antireflection effect cannot be obtained.

[Examples 1-9 to 1-13 and Comparative Examples 1-6 to 1-8]

<Verification of Dependence on Physical Thickness d1 of Dielectric Layer>

In a case where the physical thickness d1 of the dielectric layer was changed under the settings shown in Table 1 below, the reflectance of the antireflection optical member at a wavelength of 550 nm was evaluated using the same method as that in Example 1-1.

The results are collectively shown in Table 1 below.

It was found from Examples 1-9 to 1-13 that, in a case where the optical thickness (n1×d1) of the dielectric layer satisfies Expression 2, the antireflection effect can be obtained.

On the other hand, it was found that, in a case where the optical thickness (n1×d1) of the dielectric layer does not satisfy Expression 2, the antireflection effect cannot be obtained.

[Table 1]

| | Wavelength λ (nm) | Dielectric Layer | | | | | | | | | | Ultra-Low Refractive Index Layer | | | | Substrate | Evaluation Results | |
|---|---|---|---|---|---|---|---|---|---|---|---|---|---|---|---|---|---|---|
| | | n1 | k1 | d1 (nm) | n1×d1 | m=0, M-λ/8 | m=0, M+λ/8 | m=0 Expression 2 | m=1, M-λ/8 | m=1, M+λ/8 | m=1 Expression 2 | n2 | k2 | d2 (nm) | Expression 1 | n3 | Reflectance (%) | Evaluation |
| Example 1-1 | 550 | 1.5 | 0 | 44.4 | 66.7 | 0 | 138 | Y | 275 | 412.5 | N | 0.5 | 0 | 5 | Y | 1.5 | 2.66 | B |
| Example 1-2 | 550 | 1.5 | 0 | 43.1 | 64.6 | 0 | 138 | Y | 275 | 412.5 | N | 0.5 | 0 | 10 | Y | 1.5 | 1.58 | A |
| Example 1-3 | 550 | 1.5 | 0 | 40.3 | 60.5 | 0 | 138 | Y | 275 | 412.5 | N | 0.5 | 0 | 20 | Y | 1.5 | 0.238 | A |
| Example 1-4 | 550 | 1.5 | 0 | 38.0 | 57.0 | 0 | 138 | Y | 275 | 412.5 | N | 0.5 | 0 | 27 | Y | 1.5 | <0.1 | A |
| Example 1-5 | 550 | 1.5 | 0 | 37.6 | 56.4 | 0 | 138 | Y | 275 | 412.5 | N | 0.5 | 0 | 30 | Y | 1.5 | <0.1 | A |
| Example 1-6 | 550 | 1.5 | 0 | 35.0 | 52.6 | 0 | 138 | Y | 275 | 412.5 | N | 0.5 | 0 | 40 | Y | 1.5 | 0.89 | A |
| Example 1-7 | 550 | 1.5 | 0 | 33.8 | 50.7 | 0 | 138 | Y | 275 | 412.5 | N | 0.5 | 0 | 45 | Y | 1.5 | 1.67 | A |
| Example 1-8 | 550 | 1.5 | 0 | 32.6 | 48.8 | 0 | 138 | Y | 275 | 412.5 | N | 0.5 | 0 | 50 | Y | 1.5 | 2.66 | B |
| Comparative Example 1-1 | 550 | 1.5 | 0 | 30.2 | 45.3 | 0 | 138 | Y | 275 | 412.5 | N | 0.5 | 0 | 60 | N | 1.5 | 5.17 | C |
| Comparative Example 1-2 | 550 | 1.5 | 0 | 20 | 30 | 0 | 138 | Y | 275 | 412.5 | N | 0.5 | 0 | 60 | N | 1.5 | 6.27 | C |
| Comparative Example 1-3 | 550 | 1.5 | 0 | 40 | 60 | 0 | 138 | Y | 275 | 412.5 | N | 0.5 | 0 | 60 | N | 1.5 | 6.19 | C |
| Comparative Example 1-4 | 550 | 1.5 | 0 | 60 | 90 | 0 | 138 | Y | 275 | 412.5 | N | 0.5 | 0 | 60 | N | 1.5 | 13.22 | C |
| Comparative Example 1-5 | 550 | 1.5 | 0 | 80 | 120 | 0 | 138 | Y | 275 | 412.5 | N | 0.5 | 0 | 60 | N | 1.5 | 22.03 | C |
| Example 1-9 | 550 | 1.5 | 0 | 10 | 15 | 0 | 138 | Y | 275 | 412.5 | N | 0.5 | 0 | 27 | Y | 1.5 | 3.79 | B |
| Example 1-10 | 550 | 1.5 | 0 | 20 | 30 | 0 | 138 | Y | 275 | 412.5 | N | 0.5 | 0 | 27 | Y | 1.5 | 1.65 | A |
| Example 1-11 | 550 | 1.5 | 0 | 40 | 60 | 0 | 138 | Y | 275 | 412.5 | N | 0.5 | 0 | 27 | Y | 1.5 | <0.1 | A |
| Example 1-12 | 550 | 1.5 | 0 | 60 | 90 | 0 | 138 | Y | 275 | 412.5 | N | 0.5 | 0 | 27 | Y | 1.5 | 2.22 | B |

(continued)

| | Wavelength λ (nm) | Dielectric Layer | | | | | | | | | | Ultra-Low Refractive Index Layer | | | | Substrate | Evaluation Results | |
|---|---|---|---|---|---|---|---|---|---|---|---|---|---|---|---|---|---|---|
| | | n1 | k1 | d1 (nm) | n1×d1 | m=0, M-λ/8 | m=0, M+λ/8 | m=0 Expression 2 | m=1, M-λ/8 | m=1, M+λ/8 | m=1 Expression 2 | n2 | k2 | d2 (nm) | Expression 1 | n3 | Reflectance (%) | Evaluation |
| Comparative Example 1-6 | 550 | 1.5 | 0 | 100 | 150 | 0 | 138 | N | 275 | 412.5 | N | 0.5 | 0 | 27 | Y | 1.5 | 11.4 | C |
| Comparative Example 1-7 | 550 | 1.5 | 0 | 150 | 225 | 0 | 138 | N | 275 | 412.5 | N | 0.5 | 0 | 27 | Y | 1.5 | 13.4 | C |
| Example 1-13 | 550 | 1.5 | 0 | 220 | 330 | 0 | 138 | N | 275 | 412.5 | Y | 0.5 | 0 | 27 | Y | 1.5 | <0.1 | A |
| Comparative Example 1-8 | 550 | 1.5 | 0 | 300 | 450 | 0 | 138 | N | 275 | 412.5 | N | 0.5 | 0 | 27 | Y | 1.5 | 14.17 | C |

[Examples 1-14 to 1-16 and Comparative Examples 1-9 to 1-12]

<Dependence on Real Part n2 of Refractive Index of Ultra-Low Refractive Index Layer>

In a case where the real part n2 of the refractive index of the ultra-low refractive index layer was changed under the settings shown in Table 2 below, the reflectance of the antireflection optical member at a wavelength of 550 nm was evaluated using the same method as that in Example 1-1.

The results are collectively shown in Table 2 below.

It was found from Examples 1-14 to 1-16 that, in a case where the real part n2 of the refractive index of the ultra-low refractive index layer is lower than 1, the antireflection effect can be obtained irrespective of the value of n2. At this time, in the antireflection optical member according to each of the Examples, the physical thickness d2 of the ultra-low refractive index layer satisfied Expression 1, and the optical thickness (n1×d1) of the dielectric layer satisfied Expression 2.

On the other hand, it was found from Comparative Examples 1-9 to 1-12 that, in a case where the real part n2 of the refractive index of the ultra-low refractive index layer is higher than 1, the antireflection effect cannot be obtained irrespective of whether or not the imaginary part k2 of the refractive index of the ultra-low refractive index layer is 0.

[Examples 1-17 to 1-19]

<Dependence on Imaginary Part k2 of Refractive Index of Ultra-Low Refractive Index Layer>

In a case where the imaginary part k2 of the refractive index of the ultra-low refractive index layer was changed under the settings shown in Table 2 below, the reflectance of the antireflection optical member at a wavelength of 550 nm was evaluated using the same method as that in Example 1-1.

The results are collectively shown in Table 2 below.

It was found from Examples 1-17 to 1-19 that the antireflection effect can be obtained irrespective of the value of the imaginary part k2 of the refractive index of the ultra-low refractive index layer. At this time, in the antireflection optical member according to each of the Examples, the physical thickness d2 of the ultra-low refractive index layer satisfied Expression 1, and the optical thickness (n1×d1) of the dielectric layer satisfied Expression 2.

It was found that, in a case where the imaginary part k2 of the refractive index of the ultra-low refractive index layer is higher than 2.0, the effect deteriorates (Evaluation B).

[Examples 1-20 to 1-22]

<Dependence on Refractive Index n3 of Substrate>

In a case where the refractive index n3 of the substrate was changed under the settings shown in Table 2 below, the physical thickness d1 of the dielectric layer and the physical thickness d2 of the ultra-low refractive index layer were optimized such that the reflectance of the antireflection optical member at a wavelength of 550 nm was the minimum.

The results are collectively shown in Table 2 below.

It was found from Examples 1-20 to 1-22 that the antireflection effect can be obtained irrespective of the value of the refractive index n3 of the substrate. At this time, in the antireflection optical member according to each of the Examples, the physical thickness d2 of the ultra-low refractive index layer satisfied Expression 1, and the optical thickness (n1×d1) of the dielectric layer satisfied Expression 2.

[Examples 1-23 to 1-27]

<Dependence on Real Part n1 of Refractive Index of Dielectric Layer>

In a case where the real part n1 of the refractive index of the dielectric layer was changed under the settings shown in Table 2 below, the physical thickness d1 of the dielectric layer and the physical thickness d2 of the ultra-low refractive index layer were optimized such that the reflectance of the antireflection optical member at a wavelength of 550 nm was the minimum.

The results are collectively shown in Table 2 below.

It was found from Examples 1-23 to 1-27 that the antireflection effect can be obtained irrespective of the value of the real part n1 of the refractive index of the dielectric layer. At this time, in the antireflection optical member according to each of the Examples, the physical thickness d2 of the ultra-low refractive index layer satisfied Expression 1, and the

optical thickness (n1×d1) of the dielectric layer satisfied Expression 2.

[Examples 1-28 to 1-30]

<Dependence on Wavelength of Light whose Reflection was to be Prevented>

In a case where the wavelength λ (designed wavelength) of the light whose reflection was to be prevented was changed under the settings shown in Table 2 below, the physical thickness d1 of the dielectric layer and the physical thickness d2 of the ultra-low refractive index layer were optimized such that the reflectance of the antireflection optical member at the wavelength λ was the minimum.

The results are collectively shown in Table 2 below.

It was found from Examples 1-28 to 1-30 that the antireflection effect can be obtained irrespective of the value of λ. At this time, in the antireflection optical member according to each of the Examples, the physical thickness d2 of the ultra-low refractive index layer satisfied Expression 1, and the optical thickness (n1×d1) of the dielectric layer satisfied Expression 2.

[Table 2]

| | Wavelength (nm) | Dielectric Layer | | | | | | | | | | Ultra-Low Refractive Index Layer | | | | Substrate | Evaluation Results | |
|---|---|---|---|---|---|---|---|---|---|---|---|---|---|---|---|---|---|---|
| | | n1 | k1 | d1 (nm) | n1×d1 | m=0, M-λ/8 | m=0, M+λ/8 | m=0 Expression 2 | m=1 M-λ/8 | m=1, M+λ/8 | m=1 Expression 2 | n2 | k2 | d2 (nm) | Expression 1 | n3 | Reflectance (%) | Evaluation |
| Example 1-14 | 550 | 1.5 | 0 | 40 | 60 | 0 | 138 | Y | 275 | 412.5 | N | 0.1 | 0 | 24 | Y | 1.5 | <0.1 | A |
| Example 1-15 | 550 | 1.5 | 0 | 40 | 60 | 0 | 138 | Y | 275 | 412.5 | N | 0.5 | 0 | 24 | Y | 1.5 | <0.1 | A |
| Example 1-16 | 550 | 1.5 | 0 | 40 | 60 | 0 | 138 | Y | 275 | 412.5 | N | 0.9 | 0 | 24 | Y | 1.5 | <0.1 | A |
| Comparative Example 1-9 | 550 | 1.5 | 0 | 40 | 60 | 0 | 138 | Y | 275 | 412.5 | N | 1.5 | 0 | 24 | Y | 1.5 | 4 | c |
| Comparative Example 1-10 | 550 | 1.5 | 0 | 40 | 60 | 0 | 138 | Y | 275 | 412.5 | N | 1.5 | 0.7 | 24 | Y | 1.5 | 4.3 | C |
| Comparative Example 1-11 | 550 | 1.5 | 0 | 40 | 60 | 0 | 138 | Y | 275 | 412.5 | N | 1.5 | 1.4 | 24 | Y | 1.5 | 7.8 | C |
| Comparative Example 1-12 | 550 | 1.5 | 0 | 40 | 60 | 0 | 138 | Y | 275 | 412.5 | N | 1.5 | 2.1 | 24 | Y | 1.5 | 15.1 | C |
| Example 1-17 | 550 | 1.5 | 0 | 55 | 82.5 | 0 | 138 | Y | 275 | 412.5 | N | 0.5 | 0.7 | 16 | Y | 1.5 | 0.3 | A |
| Example 1-18 | 550 | 1.5 | 0 | 55 | 82.5 | 0 | 138 | Y | 275 | 412.5 | N | 0.5 | 1.4 | 16 | Y | 1.5 | 0.1 | A |
| Example 1-19 | 550 | 1.5 | 0 | 55 | 82.5 | 0 | 138 | Y | 275 | 412.5 | N | 0.5 | 2.1 | 16 | Y | 1.5 | 2.61 | B |
| Example 1-20 | 550 | 1.5 | 0 | 28 | 42 | 0 | 138 | Y | 275 | 412.5 | N | 0.5 | 0 | 28 | Y | 1.3 | <0.1 | A |
| Example 1-21 | 550 | 1.5 | 0 | 48 | 72 | 0 | 138 | Y | 275 | 412.5 | N | 0.5 | 0 | 24 | Y | 1.7 | <0.1 | A |

(continued)

| | Wavelength (nm) | Dielectric Layer | | | | | | | | | | Ultra-Low Refractive Index Layer | | | | Substrate | Evaluation Results | |
|---|---|---|---|---|---|---|---|---|---|---|---|---|---|---|---|---|---|---|
| | | n1 | k1 | d1 (nm) | n1×d1 | m=0, M-λ/8 | m=0, M+λ/8 | m=0 Expression 2 | m=1 M-λ/8 | m=1, M+λ/8 | m=1 Expression 2 | n2 | k2 | d2 (nm) | Expression 1 | n3 | Reflectance (%) | Evaluation |
| Example 1-22 | 550 | 1.5 | 0 | 58 | 87 | 0 | 138 | Y | 275 | 412.5 | N | 0.5 | 0 | 19 | Y | 1.9 | <0.1 | A |
| Example 1-23 | 550 | 1.7 | 0 | 26 | 44.2 | 0 | 138 | Y | 275 | 412.5 | N | 0.5 | 0 | 32 | Y | 1.5 | <0.1 | A |
| Example 1-24 | 550 | 1.6 | 0 | 32 | 51.2 | 0 | 138 | Y | 275 | 412.5 | N | 0.5 | 0 | 30 | Y | 1.5 | <0.1 | A |
| Example 1-25 | 550 | 1.5 | 0 | 38 | 57 | 0 | 138 | Y | 275 | 412.5 | N | 0.5 | 0 | 27 | Y | 1.5 | <0.1 | A |
| Example 1-26 | 550 | 1.4 | 0 | 49 | 68.6 | 0 | 138 | Y | 275 | 412.5 | N | 0.5 | 0 | 23 | Y | 1.5 | <0.1 | A |
| Example 1-27 | 550 | 1.3 | 0 | 67 | 87.1 | 0 | 138 | Y | 275 | 412.5 | N | 0.5 | 0 | 16 | Y | 1.5 | <0.1 | A |
| Example 1-28 | 400 | 1.5 | 0 | 28.0 | 42.0 | 0 | 100 | Y | 200 | 300 | N | 0.5 | 0 | 19.6 | Y | 1.5 | <0.1 | A |
| Example 1-29 | 700 | 1.5 | 0 | 49.0 | 73.6 | 0 | 175 | Y | 350 | 525 | N | 0.5 | 0 | 34.2 | Y | 1.5 | <0.1 | A |
| Example 1-30 | 1500 | 1.5 | 0 | 105.0 | 157.5 | 0 | 375 | Y | 750 | 1125 | N | 0.5 | 0 | 73.3 | Y | 1.5 | <0.1 | A |

[Examples 2-1 to 2-4]

In a case where m=0, 1, 2, or 3 under the settings shown in Table 3 below and the optical thickness of the dielectric layer satisfied Expression 2, the reflectance of the antireflection optical member at a wavelength of 550 nm was evaluated using the same method as that in Example 1-1.

The results are collectively shown in Table 3 below. In the column "m=2 Expression 2" of this specification, "Y" represents that the antireflection optical member satisfied Expression 2 in a case where m=2, and "N" represents that the antireflection optical member did not satisfy Expression 2 in a case where m=2. In the column "m=3 Expression 2", "Y" represents that the antireflection optical member satisfied Expression 2 in a case where m=3, and "N" represents that the antireflection optical member did not satisfy Expression 2 in a case where m=3.

It was found from Examples 2-1 to 2-4 that the antireflection effect can be obtained irrespective of the value of m. At this time, in the antireflection optical member according to each of the Examples, the physical thickness d2 of the ultra-low refractive index layer satisfied Expression 1, and the optical thickness (n1×d1) of the dielectric layer satisfied Expression 2.

In addition, the reflectance in a wavelength range of 400 nm to 700 nm is shown in Fig. 12. It was found from Fig. 12 that m=0 is the best mode where the antireflection effect can be obtained in the widest range.

[Table 3]

| | Wavelength λ (nm) | Dielectric Layer | | | | | | | | Ultra-Low Refractive Index Layer | | | | Substrate | Evaluation Results | |
|---|---|---|---|---|---|---|---|---|---|---|---|---|---|---|---|---|
| | | n1 | k1 | d1 (nm) | n1×d1 | m=0 Expression 2 | m=1 Expression 2 | m=2 Expression 2 | m=3 Expression 2 | n2 | k2 | d2 (nm) | Expression 1 | n3 | Reflectance (%) | Evaluation |
| Example 2-1:m=0 | 550 | 1.5 | 0 | 40 | 60 | Y | N | N | N | 0.5 | 0 | 27 | Y | 1.5 | <0.1 | A |
| Example 2-2:m=1 | 550 | 1.5 | 0 | 220 | 330 | N | Y | N | N | 0.5 | 0 | 27 | Y | 1.5 | <0.1 | A |
| Example 2-3:m=2 | 550 | 1.5 | 0 | 407 | 610.5 | N | N | Y | N | 0.5 | 0 | 27 | Y | 1.5 | <0.1 | A |
| Example 2-4:m=3 | 550 | 1.5 | 0 | 591 | 886.5 | N | N | N | Y | 0.5 | 0 | 27 | Y | 1.5 | <0.1 | A |

[Example 3-1]

First, the preparation and evaluation of various coating solutions used to prepare the antireflection optical member according to each of the Examples will be described.

<Preparation of Silver Flat Particle Dispersion A>

13L of ion exchange water was weighed in a reaction vessel formed of NTKR-4 (manufactured by Nisshin Steel Co., Ltd.), 1.0 L of 10 g/L trisodium citrate (anhydride) aqueous solution was added while stirring the solution using a chamber including an agitator in which four propellers formed of NTKR-4 and four paddles formed of NTKR-4 were attached to a shaft formed of SUS316L, and then the solution was held at 35°C. Further, 0.68 L of 8.0 g/L polystyrene sulfonic acid aqueous solution to the reaction vessel, and 0.041 L of 23 g/L sodium borohydride aqueous solution which was prepared using 0.04 mol/L sodium hydroxide aqueous solution was further added. Further, 13 L of 0.10 g/L silver nitrate aqueous solution was added to this reaction vessel at 5.0 L/min.

Further, 1.0 L of 10 g/L trisodium citrate (anhydride) aqueous solution and 11 L of ion exchange water were added to this reaction vessel, and 0.68 L of 80 g/L hydroquinone potassium sulfonate aqueous solution was further added. The stirring rate was increased to 800 rpm (revolutions per minute), 8.1 L of 0.10 g/L silver nitrate aqueous solution was added to the reaction vessel at 0.95 L/min, and then the solution was cooled to 30°C.

Further, 8.0 L of 44 g/L methylhydroquinone aqueous solution was added to the reaction vessel, and then the total amount of gelatin aqueous solution described below at 40°C was added. The stirring rate was increased to 1200 rpm, and the total amount of white silver sulfite precipitate mixed solution described below was added to the reaction vessel.

Once the change in the pH of the prepared solution stopped, 5.0 L of 1 mol/L NaOH aqueous solution was added to the reaction vessel at 0.33 L/min. Next, 0.18 L of 2.0 g/L 1-(m-sulfophenyl)-5-mercaptotetrazole sodium aqueous solution (in which the pH was adjusted to 7.0±1.0 using NaOH and citric acid (anhydride)) was added to the reaction vessel, and 0.078 L of 70 g/L 1,2-benzisothiazolin-3-one (in which the aqueous solution was adjusted to be alkaline using NaOH) was further added. This way, a silver flat particle dispersion A was prepared.

(Preparation of Gelatin Aqueous Solution)

16.7 L of ion exchange water was weighed in a solution tank formed of SUS316L. 1.4 kg of alkali-treated bovine bone gelatin (GPC weight average molecular weight: 200000) having undergone a deionization treatment was added while stirring the solution using an agitator formed of SUS316L at a low rate. Further, 0.91 kg of alkali-treated bovine bone gelatin (GPC weight average molecular weight: 21000) having undergone a deionization treatment, a proteolytic enzyme treatment, and an oxidation treatment using hydrogen peroxide was added to the solution tank. Next, the solution was heated to 40°C, and gelatin was simultaneously swollen and dissolved to be completely dissolved.

(Preparation of White Silver Sulfite Precipitate Mixed Solution)

8.2 L of ion exchange water was weighed in a solution tank formed of SUS316L, and 8.2 L of 100 g/L silver nitrate aqueous solution was added. 2.7 L of 140 g/L sodium sulfite aqueous solution was added to the solution tank within a short period of time while stirring the solution using an agitator formed of SUS316L at a high rate. As a result, a white silver sulfite precipitate mixed solution including a white silver sulfite precipitate was prepared. The white silver sulfite precipitate mixed solution was prepared immediately before use.

<Preparation of Silver Flat Particle Dispersion B>

800 g of the silver flat particle dispersion A was collected in a centrifuge tube, and the pH thereof was adjusted to 9.2±0.2 at 25°C using at least one of 1 mol/L NaOH or 0.5 mol/L sulfuric acid. Using a centrifugal separator (himac CR22G III, manufactured by Hitachi Koki Co., Ltd., angle rotor R9A), the solution was centrifugally separated at 9000 rpm at 35°C for 60 minutes, and 784 g of the supernatant was thrown away. 0.2 mmol/L NaOH aqueous solution was added to precipitated silver flat particles and was manually stirred using a stirring rod to prepare 400 g in total of a coarse dispersion. By performing the same operation as described above, 9600 g in total of 24 coarse dispersions were prepared, were added to a tank formed of SUS316L, and were mixed with each other. Further, 10 mL of 10 g/L solution (diluted with a mixed solution of methanol: ion exchange water=1:1 (volume ratio)) of Pluronic 31R1 (manufactured by BASF SE) as a surfactant was added to the tank. Using AUTO MIXER 20 (manufactured by Primix Corporation; a stirring portion was a homogenizer MARK II), the mixture of the coarse dispersion and the surfactant in the tank was dispersed in a batch process at 9000 rpm for 120 minutes. During dispersing, the liquid temperature was held at 50°C. After

dispersing, the dispersion was cooled to 25°C and was filtered in a single pass using a Profile II filter (Product Model: MCY1001Y030H13, manufactured by Pall Corporation).

This way, the silver flat particle dispersion A was desalted and redispersed to prepare a silver flat particle dispersion B.

<Evaluation of Flat Metal Particles>

It was verified that flat metal particles having a hexagonal shape, a circular shape, and a triangular shape were formed in the silver flat particle dispersion A. An image of the silver flat particle dispersion A obtained by TEM observation was input to an image processing software ImageJ and processed. Images of 500 particles which were arbitrarily selected from the TEM image in various visual fields were processed to calculate the equivalent circle diameters corresponding to the areas of the particles. As a result of statistical processing based on this population, the average diameter of the flat metal particles was 120 nm.

When the silver flat particle dispersion B was measured using the same method as described above, the shape of the particle size distribution was substantially the same as that of the silver flat particle dispersion A.

The silver flat particle dispersion B was dripped on a silicon substrate and dried, and then the thicknesses of the silver flat particles were measured using an FIB-TEM method. The thicknesses of 10 silver flat particles in the silver flat particle dispersion B1 were measured, and the average thickness was 8 nm.

This way, it was verified that the silver flat particle dispersion B includes flat metal particles in which a ratio of the average diameter to the average thickness was 15.0.

<Preparation of Ultra-Low Refractive Index Layer-Forming Coating Solution >

In order to form an ultra-low refractive index layer including the silver flat particles as guests, ultra-low refractive index layer-forming coating solutions 1A, 1B, 1C, and 1D were prepared according to the compositions shown in Table 4 below.

The respective values are expressed in mass%.

(Compositions of Ultra-Low Refractive Index Layer-Forming Coating Solutions)

[Table 4]

| | Coating Solution 1A | Coating Solution 1B | Coating Solution 1C | Coating Solution 1D |
|---|---|---|---|---|
| Polyurethane Aqueous Solution: HYDRAN HW-350 (manufactured by DIC Corporation, Solid Content Concentration: 30 mass%) | 0.27% | 0.26% | 0.25% | 0.24% |
| Surfactant A: F LIPAL 8780P (Manufactured by Lion Corporation, Solid Content: 1 mass%) | 0.98% | 0.94% | 0.91% | 0.88% |
| Surfactant B: NAROACTY CL-95 (Manufactured by Sanyo Chemical Industries Ltd., Solid Content: 1 mass%) | 1.21% | 1.17% | 1.13% | 1.09% |
| Surfactant C (Sodium=1.2-{bis(3,3,4,4,5,5,6,6,6-Nanofluorohexylca rbonyl)}Ethanesulfonate (Solid Content: 2 mass%) | 1.02% | 0.98% | 0.95% | 0.91% |
| Silver Flat Particle Dispersion B | 11.49% | 14.75% | 17.78% | 20.61% |
| 1-(5-Methylureidophenyl)-5-Mercaptotetrazole (Manufactured by Wako Pure Chemical Industries Ltd., Solid Content: 2 mass%) | 0.62% | 0.60% | 0.58% | 0.56% |
| Water | 53.89% | 51.90% | 50.05% | 48.34% |
| Methanol | 30.53% | 29.40% | 28.35% | 27.38% |

<Preparation of Hard Coat Layer-Forming Coating Solution>

A hard coat layer-forming coating solution was prepared according to the composition shown in Table 5 below.

The respective values are expressed in part(s) by mass.

(Composition of Hard Coat Layer-Forming Coating Solution)

[Table 5]

| | |
|---|---|
| A-TMMT: Pentaerythritol Tetraacrylate (Manufactured by Shin-Nakamura Chemical Co., Ltd., Solid Content Concentration: 75 mass%) | 52 |
| AD-TMP: Ditrimethylol Propane Tetraacrylate (Manufactured by Shin-Nakamura Chemical Co., Ltd., Solid Content Concentration: 100 mass%) | 19.18 |
| Leveling Agent A: Methyl Ethyl Ketone Solution: Compound Shown Below (Solid Content Concentration: 2 mass%) | 1.36 |
| Photopolymerization Initiator IRGACURE 127 (Manufactured by BASF SE, Solid Content Concentration: 100 mass%) | 2.53 |
| Methyl Acetate | 10.61 |
| Methyl Ethyl Ketone | 14.31 |

Leveling Agent A

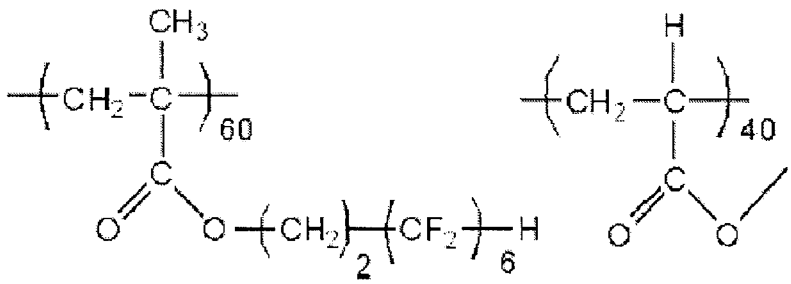

Mw: 25000

<Preparation of Dielectric Layer-Forming Coating Solution>

A dielectric layer-forming coating solution was prepared according to the composition shown in Table 6 below.

The respective values are expressed in part(s) by mass.

(Composition of Dielectric Layer-Forming Coating Solution)

[Table 6]

| | |
|---|---|
| Solution including 4% of Compound M-11 having Structure shown below (Solvent: Methyl Ethyl Ketone) | 28.5 |
| KAYARAD PET-30 (Manufactured by Nippon Kayaku Co., Ltd.) 7 parts by mass | 0.3 |
| Hollow Silica Dispersion: THRULYA 4320 (Manufactured by JGC C&C) | 10.2 |
| Photopolymerization Initiator IRGACURE 127 (Manufactured by BASF Japan) | 0.04 |
| Methyl Ethyl Ketone | 56.16 |
| Cyclohexane | 4.8 |

Compound M-11

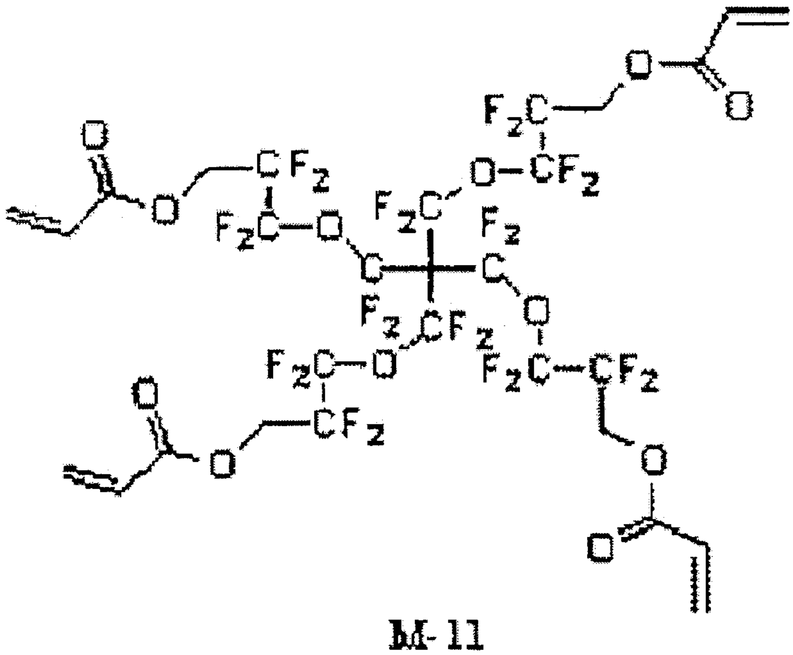

M-11

<Formation of Laminate Structure>

The hard coat layer-forming coating solution was applied to a surface of triacetyl cellulose (TAC; TD60UL, manufactured by Fujifilm Corporation, 60 μm, refractive index: 1.5) as a substrate using a wire bar such that the average thickness of the dried coating film was 10 μm. Next, the coating film was heated and dried at 90°C for 1 minute. Next, while performing nitrogen purge such that the oxygen concentration was 1% or lower, the coating film was half-cured to form a hard coat layer by irradiating it with ultraviolet light using a D bulb UV lamp for F600 (manufactured by Fusion UV Systems, Inc.) at an illuminance of 80 $mW/cm^2$ and an irradiation dose of 100 $mJ/cm^2$.

The ultra-low refractive index layer-forming coating solution 1A was applied to the formed hard coat layer using a wire bar such that the average thickness of the dried coating film was 10 nm. Next, the coating film was heated, dried, and solidified at 110°C for 1 minute to form an ultra-low refractive index layer.

The dielectric layer-forming coating solution was applied to the formed ultra-low refractive index layer using a wire bar such that the average thickness of the dried coating film was 60 nm. Next, the coating film was heated and dried at 60°C for 1 minute. Next, while performing nitrogen purge such that the oxygen concentration was 0.5% or lower, the coating film was cured to form a dielectric layer by irradiating it with ultraviolet light using a D bulb UV lamp for F600 (manufactured by Fusion UV Systems, Inc.) at an illuminance of 200 $mW/cm^2$ and an irradiation dose of 300 $mJ/cm^2$.

Through the above-described steps, an antireflection optical member according to Example 3-1 having a laminate structure of substrate/hard coat layer/ultra-low refractive index layer/dielectric layer was obtained.

[Examples 3-2 to 3-4]

Antireflection optical members according to Examples 3-2 to 3-4 were obtained using the same method as in Example 3-1, except that during the application of the ultra-low refractive index layer-forming coating solution 1A to the hard coat layer, the ultra-low refractive index layer-forming coating solutions 1B, 1C, and ID were used, respectively, instead of the ultra-low refractive index layer-forming coating solution 1A.

<Method of Deriving Refractive Index of Ultra-Low Refractive Index Layer>

Before the formation of the ultra-low refractive index layer and after the formation of the dielectric layer, an image was obtained by observation with a scanning electron microscope (SEM) and was binarized using ImageJ. Next, the refractive index n2 of the ultra-low refractive index layer at a wavelength of 550 nm was derived by an optical simulation using an FDTD method according to a method described in D. R. Smith etal., Phys. Rev. B 65, 195104 (2002).

<Method of Deriving Refractive Index of Dielectric Layer>

The dielectric layer-forming coating solution was applied to a glass substrate using a spin coater such that the average thickness of the dried coating film was 60 nm. Next, the coating film was heated and dried at 60°C for 1 minute. Next, while performing nitrogen purge such that the oxygen concentration was 0.5% or lower, the coating film was cured to form a dielectric layer by irradiating it with ultraviolet light using a D bulb UV lamp for F600 (manufactured by Fusion UV Systems, Inc.) at an illuminance of 200 $mW/cm^2$ and an irradiation dose of 300 $mJ/cm^2$. The refractive index n1 of the obtained dielectric layer was measured using a spectroscopic ellipsometer MASS (manufactured by 51ab Co., Ltd.).

<Method of Deriving Refractive Index of Hard Coat Layer>

The hard coat layer-forming coating solution was applied to a glass substrate using a spin coater such that the average thickness of the dried coating film was 1 $\mu$m. Next, the coating film was heated and dried at 90°C for 1 minute. Next, while performing nitrogen purge such that the oxygen concentration was 1% or lower, the coating film was half-cured to form a hard coat layer by irradiating it with ultraviolet light using a D bulb UV lamp for F600 (manufactured by Fusion UV Systems, Inc.) at an illuminance of 80 $mW/cm^2$ and an irradiation dose of 100 $mJ/cm^2$. The result of measuring the refractive index of the obtained hard coat layer using a spectroscopic ellipsometer MASS (manufactured by 51ab Co., Ltd.) was obtained as the refractive index n3 of the substrate with the hard coat layer.

[Evaluation]

<Evaluation of Reflectance>

Using a thickness measuring device FE3000 (manufactured by Otsuka Electronics Co., Ltd.), the surface reflectance of the antireflection optical member according to each of the Examples at a wavelength of 550 nm was evaluated based on the same standards as in Example 1-1. The reflectance of the substrate used in Examples 3-1 to 3-4 at a wavelength of 550 nm was also 4%.

The evaluation results are collectively shown in Table 7 below.

It was found from Table 7 that, in the antireflection optical members according to Examples 3-1 to 3-4, the real part of the refractive index of the ultra-low refractive index layer was lower than 1, the physical thickness of the ultra-low refractive index layer was $\lambda/10$ or lower and satisfied Expression 1, the optical thickness of the dielectric layer was substantially $(2m+1)/8\times\lambda$ and satisfied Expression 2, and the antireflection effect was sufficiently obtained.

[Table 7]

| | Wavelength λ (nm) | Dielectric Layer | | | | | | | Ultra-Low Refractive Index Layer | | | | | | Substrate | Evaluation Results | |
|---|---|---|---|---|---|---|---|---|---|---|---|---|---|---|---|---|---|
| | | n1 | k1 | d1 (nm) | n1×d1 | m=0, M-λ/8 | m=0, M+λ/8 | m=0 Expresion 2 | Coating Solution | Guest Size (nm) | n2 | k2 | d2 (nm) | Expression 1 | n3 | Reflectance (%) | Evaluation |
| Example 3-1 | 550 | 1.4 | 0 | 60 | 84 | 0 | 138 | Y | 1A | 120 | 0.8 | 0.4 | 10 | Y | 1.5 | 0.5 | A |
| Example 3-2 | 550 | 1.4 | 0 | 60 | 84 | 0 | 138 | Y | 1B | 120 | 0.4 | 0.9 | 10 | Y | 1.5 | 0.15 | A |
| Example 3-3 | 550 | 1.4 | 0 | 60 | 84 | 0 | 138 | Y | 1C | 120 | 0.3 | 1.1 | 10 | Y | 1.5 | 0.13 | A |
| Example 3-4 | 550 | 1.4 | 0 | 60 | 84 | 0 | 138 | Y | 1D | 120 | 0.2 | 1.4 | 10 | Y | 1.5 | 0.11 | A |

<Verification of Conduction Path Formation and Disposition of Flat Metal Particles>

A 2.5 μm×2.5 μm region of the antireflection optical member according to each of Examples 3-1 to 3-4 was observed using scanning electron microscope (SEM). In a case where metal particles were continuously disposed in a range from a left end to a right end of the obtained image, it was determined that a conduction path was formed. In a case where metal particles were separated halfway, it was determined that a conduction path was not formed.

As a result, it was found that, in the antireflection optical members according to each of the Examples, a plurality of flat metal particles did not form a conduction path in a plane direction in the metal particle-containing layer. It was also found that the flat metal particles did not overlap each other in the thickness direction and were disposed in a single layer. In addition, it was also found that, even in a case where a layer including a light-absorbing material was used as the metal particle-containing layer, a plurality of flat metal particles and the light-absorbing material did not form a conduction path in a plane direction in the metal particle-containing layer.

Further, as shown in Fig. 4, it was verified that 80% or higher of a plurality of flat metal particles were disposed independent of each other in the metal particle-containing layer. In addition, it was also found that, even in a case where a layer including a light-absorbing material was used as the metal particle-containing layer, 70% or higher of a plurality of flat metal particles and the light-absorbing material were disposed independent of each other in the metal particle-containing layer.

[Example 4]

An antireflection effect having a metamaterial structure in which the guests were rod-shaped was evaluated using an optical simulation.

In the laminate configuration (substrate/ultra-low refractive index layer/dielectric layer) shown in Fig. 3 in which the length (size) of the ultra-low refractive index layer was 200 nm and in which 20 vol% of nanorods having a diameter of 20 nm were mixed with a binder of n=1.5, the real part n2 and the imaginary part k2 of the refractive index of the ultra-low refractive index layer at a wavelength of 550 nm were derived by an optical simulation using an FDTD method according to a method described in D. R. Smith et al., Phys. Rev. B 65, 195104 (2002).

Next, the wavelength λ (designed wavelength) of the light whose reflection was to be prevented, the real part n1 and the imaginary part k1 of the refractive index of the dielectric layer, the physical thickness d1 of the dielectric layer, the physical thickness d2 of the ultra-low refractive index layer, and the refractive index n3 of the substrate were set as shown in Table 8 below. The reflectance of the antireflection optical member was calculated by an optical simulation using an FDTD method.

The reflectance was evaluated using the same method as in Example 1-1. The evaluation results are collectively shown in Table 8 below.

It was found that, in the antireflection optical member according to Example 4, the real part of the refractive index of the ultra-low refractive index layer was lower than 1, the physical thickness of the ultra-low refractive index layer was λ/10 or lower and satisfied Expression 1, the optical thickness of the dielectric layer was substantially (2m+1)/8×λ and satisfied Expression 2, and the antireflection effect was sufficiently obtained.

[Table 8]

| | Wavelength λ (nm) | Dielectric Layer | | | | | | | Ultra-Low Refractive Index Layer | | | | | Substrate | Evaluation Results | |
|---|---|---|---|---|---|---|---|---|---|---|---|---|---|---|---|---|
| | | n1 | k1 | d1 (nm) | n1×d1 | m=0, M-λ/8 | m=0, M+λ/8 | m=0 Expresion 2 | Guest Size (nm) | n2 | k2 | d2 (nm) | Expression 1 | n3 | Reflectance (%) | Evaluation |
| Example 4 | 550 | 1.5 | 0 | 45 | 67.5 | 0 | 138 | Y | 200 | 0.5 | 0.8 | 20 | Y | 1.5 | 0.4 | A |

[Example 5]

A 3-inch (1 inch=about 25.4 mm) glass wafer (manufactured by Asahi Glass Co., Ltd.) was used as a substrate.

A positive EB resist FEP171 (manufactured by Fujifilm Electronic Materials Co., Ltd.) was spin-coated to the substrate using a spin coater (manufactured by Mikasa Co., Ltd.) at 1200 rpm, and then was dried at 120°C to form a resist.

The resist on the substrate was exposed by irradiating it with electron beams using an electron beam lithography device JBX-6700 (manufactured by JEOL Ltd.) to randomly form a square pattern having a diameter of 200 nm on a plane. The substrate was post-baked at 120°C and then was developed using an EB resist developer FHD-5 (manufactured by Fujifilm Electronic Materials Co., Ltd.) to form a resist pattern.

Using a sputtering device SPF730H (manufactured by Canon Anelva Corporation), an Ag thin film having a thickness of 20 nm was formed by sputtering on the substrate on which the resist pattern was formed.

The substrate on which the Ag thin film having a thickness of 20 nm was formed was dipped in an acetone solution and ultrasonically cleaned to remove the resist pattern.

As a result, a silver particle-dispersed structure was obtained on the substrate. An SEM image shown in Fig. 15 was obtained by observing the obtained substrate and the silver particle-dispersed structure with an SEM.

Using an EB deposition device EBX-8C (manufactured by Ulvac Techno Ltd.), a silica film having a thickness of 60 nm was formed to cover the silver particle-dispersed structure formed on the substrate.

The obtained laminate was set as the antireflection optical member according to Example 5. In the antireflection optical member according to Example 5, the host medium of the metamaterial structure of the ultra-low refractive index layer was formed of the same material (that is, the silica film) as the dielectric layer.

<Derivation of Refractive Index>

An SEM image was binarized using an image processing software ImageJ. A simulation model of the ultra-low refractive index layer was created for the optical simulation using an FDTD method by applying the refractive index of silver to the particle portions and applying the refractive index of silica to the other portions. The refractive index n2 of the silver particle layer at a wavelength of 550 nm was derived by an optical simulation using an FDTD method according to a method described in D. R. Smith et al., Phys. Rev. B 65, 195104 (2002). The derived refractive index was 0.4.

<Measurement of Thickness>

The prepared antireflection optical member was cut using an FIB, and a cross-section thereof was observed to measure the thickness. In the antireflection optical member according to Example 5, the host medium of the metamaterial structure of the ultra-low refractive index layer was formed of the same material as the dielectric layer. In addition, in the antireflection optical member according to Example 5, the thickness of the dielectric layer varied depending on the positions, and the surface of the dielectric layer opposite to the ultra-low refractive index layer had a wavy shape conforming with the positions of the guests as shown in Fig. 16. Therefore, using the method described in this specification, the positions of "the dotted line" and "the chain line" shown in Fig. 16 were determined, and the physical thickness d1 of the dielectric layer and the physical thickness d2 of the ultra-low refractive index layer were determined. In the antireflection optical member according to Example 5, the physical thickness d1 of the dielectric layer was 40 nm, and the physical thickness d2 of the ultra-low refractive index layer was 20 nm. The total thickness was 60 nm which was the same as the thickness of the deposited silica film.

The evaluation results are collectively shown in Table 9 below.

It was found from Table 9 below that, in the antireflection optical member according to Example 5, the real part of the refractive index of the ultra-low refractive index layer was lower than 1, the physical thickness of the ultra-low refractive index layer was $\lambda/10$ or lower, the optical thickness of the dielectric layer was substantially $(4m+1)/8\times\lambda$, and the antireflection effect was sufficiently obtained.

[Table 9]

| | Wavelength λ (nm) | Dielectric Layer | | | | | | | Ultra-Low Refractive Index Layer | | | | | Substrate | Evaluation Results | |
|---|---|---|---|---|---|---|---|---|---|---|---|---|---|---|---|---|
| | | n1 | k1 | d1 (nm) | n1×d1 | m=0, M-λ/8 | m=0, M+λ/8 | m=0 Expresion 2 | Guest Size (nm) | n2 | k2 | d2 (nm) | Expression 1 | n3 | Reflectance (%) | Evaluation |
| Example 5 | 550 | 1.5 | 0 | 40 | 60 | 0 | 138 | Y | 200 | 0.4 | 0.9 | 20 | Y | 1.5 | 0.3 | A |

Explanation of References

1: antireflection optical member
2: substrate
3A: antireflection structure
4: ultra-low refractive index layer
5: dielectric layer
6: second dielectric layer
10: external environment (air)
41: host medium (binder)
42: guest (flat metal particle)
A: reflected light from interface between dielectric layer and external environment (air)
B: reflected light from dielectric layer-side interface of substrate (interface between ultra-low refractive index layer and substrate)
C: reflected light from interface between dielectric layer and ultra-low refractive index layer
T: (average) thickness of flat metal particles
D: (average) diameter of flat metal particles
d1: physical thickness of dielectric layer
d2: physical thickness of ultra-low refractive index layer

## Claims

1. An antireflection optical member (1) which is an antireflection structure for preventing reflection from a substrate (2), the antireflection optical member (1) comprising:

   a laminate structure including a dielectric layer (5), an ultra-low refractive index layer (4), and the substrate (2) that are laminated in this order,
   wherein the ultra-low refractive index layer (4) has a metamaterial structure in which a host medium (41) includes guests (42) having a smaller size than a wavelength λ of light whose reflection is to be prevented,
   a real part n2 of a refractive index of the ultra-low refractive index layer satisfies $n2<1$,
   a physical thickness d2 of the ultra-low refractive index layer (4) satisfies the following Expression 1, and
   the dielectric layer satisfies the following Expression 2,

   $$d2<\lambda/10 \quad \ldots \quad \text{Expression 1,}$$

   $$M-\lambda/8<n1xd1<M+\lambda/8 \quad \ldots \quad \text{Expression 2,}$$

   $$M=(4m+1)x\lambda/8 \quad \ldots \quad \text{Expression 3,}$$

   where d1 represents a physical thickness of the dielectric layer(5), n1 represents a real part of a refractive index of the dielectric layer (5), and m represents an integer of 0 or more,
   wherein the substrate (2) is a film and the real part n2 of a refractive index of the ultra-low refractive index layer (4) is lower than the real part n3 of a refractive index of the substrate (2), and
   the substrate (2) comprises a film or a laminated film including a polyolefin resin, a polyester resin, a polycarbonate resin, a polyvinyl chloride resin, a polyphenylene sulfide resin, a polyether sulfone resin, a polyphenylene ether resin, a styrene resin, an acrylic resin, a polyamide resin, a polyimide resin, or cellulose resin.

2. The antireflection optical member (1) according to claim 1,
   wherein the dielectric layer (5) is an outermost layer.

3. The antireflection optical member (1) according to claim 1 or 2,

wherein an imaginary part k2 of the refractive index of the ultra-low refractive index layer is 2 or lower.

**4.** The antireflection optical member (1) according to any one of claims 1 to 3, wherein the metamaterial structure is a single layer.

**5.** The antireflection optical member (1) according to any one of claims 1 to 4, wherein the guests (42) are flat or rod-shaped.

**6.** The antireflection optical member (1) according to any one of claims 1 to 5, wherein the guests (42) are metal particles, and a structure in which the metal particles are dispersed in the host medium (41) is adopted.

**7.** The antireflection optical member (1) according to claim 6, wherein the metal particles include gold, silver, platinum, copper, aluminum, or an alloy including one or more metals selected from the group consisting of gold, silver, platinum, and aluminum.

**8.** The antireflection optical member (1) according to any one of claims 1 to 7, wherein the wavelength $\lambda$ of the light whose reflection is to be prevented is 400 to 700 nm.

**9.** The antireflection optical member (1) according to any one of claims 1 to 7, wherein the wavelength $\lambda$ of the light whose reflection is to be prevented is higher than 700 nm and 2500 nm or lower.

**10.** The antireflection optical member (1) according to any of claims 1 to 9, wherein the host medium (41) preferably comprises a binder.

**11.** The antireflection optical member (1) according to claim 10, wherein the binder comprises a polyvinyl alcohol resin, a polyvinyl butyral resin, a polyvinyl chloride resin, a polyester resin, or a polyurethane resin.

**12.** A method of manufacturing the antireflection optical member according to any one of claims 1 to 9, comprising: a step of manufacturing the metamaterial structure using a lithography method.

**13.** A method of manufacturing the antireflection optical member according to any one of claims 1 to 9, comprising: a step of manufacturing the metamaterial structure using a self-organization method.

**Patentansprüche**

**1.** Entspiegeltes optisches Element (1), das eine Antireflexionsstruktur zum Verhindern einer Reflexion von einem Substrat (2) ist, umfassend:

eine Laminatstruktur, die eine dielektrische Schicht (5), eine Schicht (4) mit einem ultraniedrigen Brechungsindex und das Substrat enthält, die in der genannten Reihenfolge geschichtet sind,
wobei die Schicht (4) mit ultraniedrigem Brechungsindex eine Metamaterialstruktur aufweist, in der ein Wirtsmedium (41) Gäste (42) mit einer Größe enthält, die kleiner ist als eine Wellenlänge $\lambda$ von Licht, dessen Reflexion zu verhindern ist,
ein Realteil n2 eines Brechungsindex' der Schicht mit ultraniedrigem Brechungsindex die Bedingung $n2<1$ erfüllt, eine bauliche Dicke d2 der Schicht (4) mit ultraniedrigem Brechungsindex die folgende Beziehung 1 erfüllt, und die dielektrische Schicht den folgenden Ausdruck 2 erfüllt

$$d2<\lambda/10 \quad \ldots \text{ Ausdruck 1,}$$

$$M-\lambda/8<n1\times d1<M+\lambda/8 \quad \ldots \text{ Ausdruck 2,}$$

$$M=(4m+1)\times\lambda/8 \quad \ldots \quad \text{Ausdruck 3,}$$

wobei d1 eine bauliche Dicke der dielektrischen Schicht (5), n1 ein Realteil eines Brechungsindex’ der dielektrischen Schicht (5) und m eine natürliche Zahl von 0 oder mehr bedeutet,
wobei das Substrat (2) ein Film ist und der Realteil n2 eines Brechungsindex’ der Schicht (4) mit ultraniedrigem Brechungsindex kleiner ist als der Realteil n3 eines Brechungsindex’ des Substrats (2) und
das Substrat (2) einen Film oder einen laminierten Film aufweist, enthaltend ein Polyolefinharz, ein Polyesterharz, ein Polycarbonatharz, ein Polyvinylchloridharz, ein Polyphenylen-Sulfid-Harz, ein Polyethersulfonharz, ein Polyphenyletherharz, ein Styrolharz, ein Acrylharz, ein Polyamidharz, ein Polyimidharz oder Zelluloseharz.

**2.** Optisches Element (1) nach Anspruch 1, bei dem die dielektrische Schicht (5) eine äußerste Schicht ist.

**3.** Optisches Element (1) nach Anspruch 1 oder 2,
bei dem ein Imaginärteil k2 des Brechungsindex’ der Schicht mit ultraniedrigem Brechungsindex 2 oder weniger enthält.

**4.** Optisches Element (1) nach einem der Ansprüche 1 bis 3,
bei dem die Metamaterial-Struktur eine Einzelschicht ist.

**5.** Optisches Element (1) nach einem der Ansprüche 1 bis 4,
bei dem die Gäste (42) flach oder stabförmig sind.

**6.** Optisches Element (1) nach einem der Ansprüche 1 bis 5,
bei dem die Gäste (42) Metallpartikel sind, und
eine Struktur angenommen wird, in der die Metallpartikel in dem Wirtsmedium (41) dispergiert sind.

**7.** Optisches Element (1) nach Anspruch 6,
bei dem die Metallpartikel Gold, Silber, Platin, Kupfer, Aluminium oder eine Legierung, die ein oder mehrere Metalle aus der Gruppe Gold, Silber, Platin und Aluminium enthält, enthalten.

**8.** Optisches Element (1) nach einem der Ansprüche 1 bis 7,
bei dem die Wellenlänge $\lambda$ des Lichts, dessen Reflexion zu verhindern ist, 400 bis 700 nm beträgt.

**9.** Optisches Element (1) nach einem der Ansprüche 1 bis 7,
bei dem die Wellenlänge $\lambda$ des Lichts, dessen Reflexion zu verhindern ist, höher als 700 nm und 2.500 nm oder weniger beträgt.

**10.** Optisches Element (1) nach einem der Ansprüche 1 bis 9,
bei dem das Wirtsmedium (41) vorzugsweise einen Binder aufweist.

**11.** Optisches Element (1) nach Anspruch 10,
bei dem der Binder ein Polyvinylalkoholharz, ein Polyvinylbutyralharz, ein Polyvinylchloridharz, ein Polyesterharz oder ein Polyurethanharz aufweist.

**12.** Verfahren zum Fertigen eines entspiegelten optischen Elements nach einem der Ansprüche 1 bis 9, umfassend:
einen Schritt des Fertigens der Metamaterial-Struktur unter Verwendung eines Lithographieverfahrens.

**13.** Verfahren zum Fertigen eines entspiegelten optischen Elements nach einem der Ansprüche 1 bis 9, umfassend:
einen Schritt des Fertigens der Metamaterial-Struktur unter Einsatz eines Selbstorganisationsverfahrens.

## Revendications

**1.** Elément optique antireflet (1), lequel est une structure antireflet permettant d’empêcher la réflexion à partir d’un substrat (2), l’élément optique antireflet (1) comprenant :

une structure stratifiée incluant une couche diélectrique (5), une couche à indice de réfraction ultra-bas (4), et le substrat (2), lesquels sont laminés dans cet ordre,
dans lequel la couche à indice de réfraction ultra-bas (4) présente une structure de métamatériau, où une matrice d'accueil (41) inclut des invités (42) présentant une taille inférieure à une longueur d'onde $\lambda$ de lumière dont le reflet doit être empêché,
une partie réelle n2 d'un indice de réfraction de la couche à indice de réfraction ultra-bas satisfait $n2 < 1$ ;
une épaisseur physique d2 de la couche à indice de réfraction ultra-bas (4) satisfait l'expression suivante 1, et la couche diélectrique satisfait l'équation suivante 2 :

$$d2 < \lambda/10 \quad \ldots \quad \text{Expression 1 ;}$$

$$M - \lambda/8 < n1 \times d1 < M + \lambda/8 \quad \ldots \quad \text{Expression 2 ;}$$

$$M = (4m+1) \times \lambda/8 \quad \ldots \quad \text{Expression 3,}$$

où d1 représente une épaisseur physique de la couche électrique (5) ; n1 représente une partie réelle d'un indice de réfraction de la couche diélectrique (5), et m représente un entier supérieur ou égal à 0,
dans lequel le substrat (2) est un film, et la partie réelle n2 d'un indice de réfraction de la couche à indice de réfraction ultra-bas (4) est inférieure à la partie réelle n3 d'un indice de réfraction du substrat (2), et
le substrat (2) comprend un film ou un film stratifié incluant une résine de polyoléfine, une résine de polyester, une résine de polycarbonate, une résine de polychlorure de vinyle, une résine de polyphénylène sulfide, une résine de polyéthersulfone, une résine de polyphénylène éther, une résine de styrène, une résine acrylique, une résine polyamide, une résine polyimide, ou résine de cellulose.

**2.** Elément optique antireflet (1) selon la revendication 1,
dans lequel la couche diélectrique (5) est une couche située le plus à l'extérieur.

**3.** Elément optique antireflet (1) selon la revendication 1 ou 2,
dans lequel une partie imaginaire k2 de l'indice de réfraction de la couche à indice de réfraction ultra-bas est inférieure ou égale à 2.

**4.** Elément optique antireflet (1) selon l'une quelconque des revendications 1 à 3,
dans lequel la structure de métamatériau est une couche unique.

**5.** Elément optique antireflet (1) selon l'une quelconque des revendications 1 à 4,
dans lequel les invités (42) sont plats ou en forme de tige.

**6.** Elément optique antireflet (1) selon l'une quelconque des revendications 1 à 5,
dans lequel les invités (42) sont des particules métalliques, et
une structure est adoptée, où les particules métalliques sont dispersées dans la matrice d'accueil (41).

**7.** Elément optique antireflet (1) selon la revendication 6,
dans lequel les particules métalliques incluent de l'or, de l'argent, du platine, du cuivre, de l'aluminium, ou un alliage incluant un ou plusieurs métaux sélectionnés parmi le groupe consistant en l'or, l'argent, le platine, et l'aluminium.

**8.** Elément optique antireflet (1) selon l'une quelconque des revendications 1 à 7,
dans lequel la longueur d'onde $\lambda$ de la lumière dont la réflexion doit être empêchée s'étend de 400 à 700 nm.

**9.** Elément optique antireflet (1) selon l'une quelconque des revendications 1 à 7,
dans lequel la longueur d'onde $\lambda$ de la lumière dont la réflexion doit être empêchée est supérieure à 700 nm et inférieure ou égale à 2500 nm.

**10.** Elément optique antireflet (1) selon l'une quelconque des revendications 1 à 9,
dans lequel la matrice d'accueil (41) comprend de préférence un liant.

**11.** Elément optique antireflet (1) selon la revendication 10,
dans lequel le liant comprend une résine de polyalcool de vinyle, une résine butyral polyvinylique, une résine de polychlorure de vinyle, une résine de polyester, ou une résine de polyuréthane.

**12.** Procédé de fabrication de l'élément optique antireflet selon l'une quelconque des revendications 1 à 9, comprenant : une étape de fabrication de la structure de métamatériau à l'aide d'un procédé lithographique.

**13.** Procédé de fabrication de l'élément optique antireflet selon l'une quelconque des revendications 1 à 9, comprenant : une étape de fabrication de la structure de métamatériau à l'aide d'un procédé d'auto-organisation.

FIG. 1

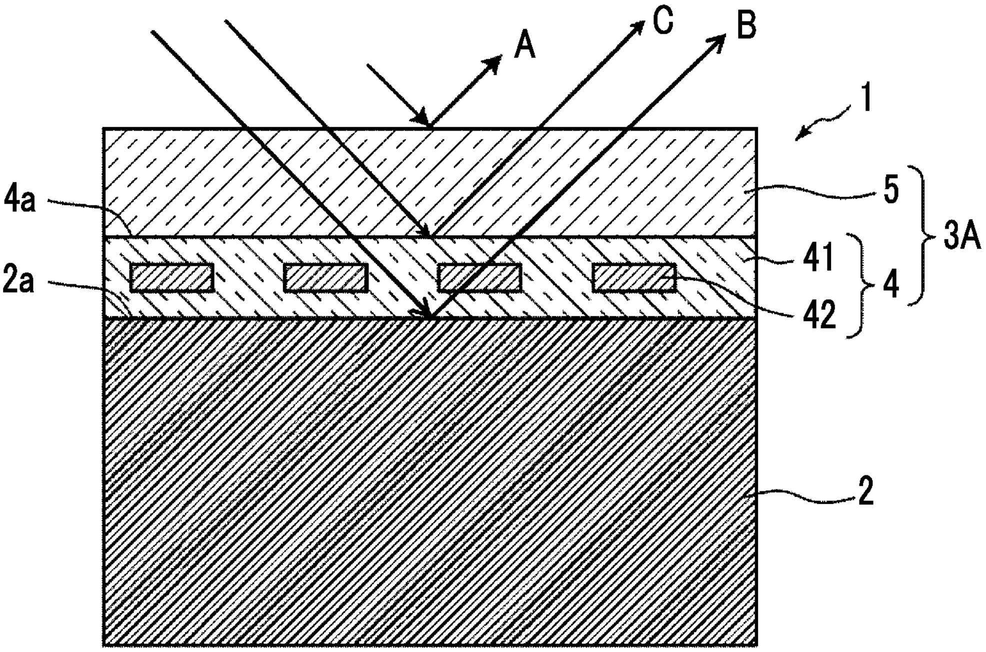
A
C
B
1
4a
5
3A
41
2a
4
42
2

FIG. 2

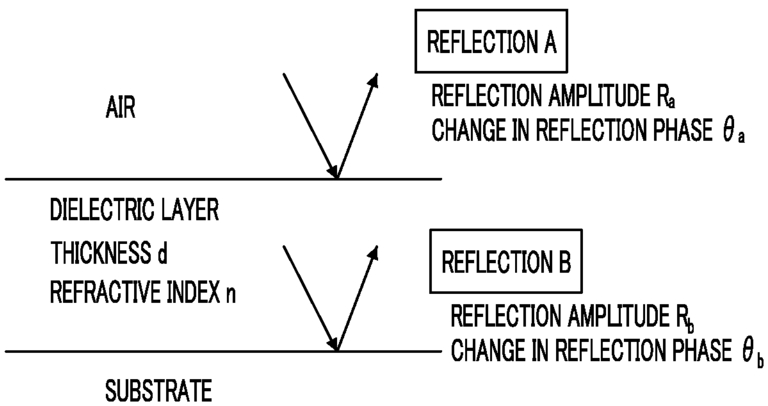
REFLECTION A
AIR
REFLECTION AMPLITUDE $R_a$
CHANGE IN REFLECTION PHASE $\theta_a$
DIELECTRIC LAYER
THICKNESS d
REFRACTIVE INDEX n
REFLECTION B
REFLECTION AMPLITUDE $R_b$
CHANGE IN REFLECTION PHASE $\theta_b$
SUBSTRATE

FIG. 3

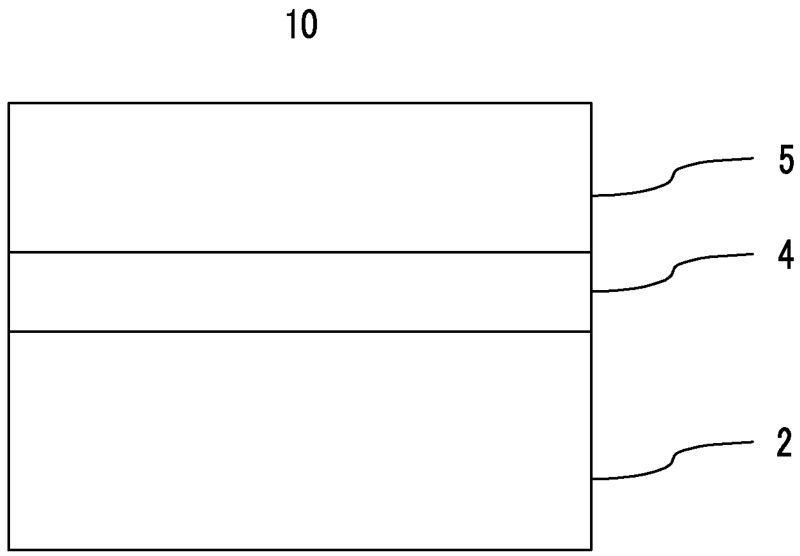


FIG. 4

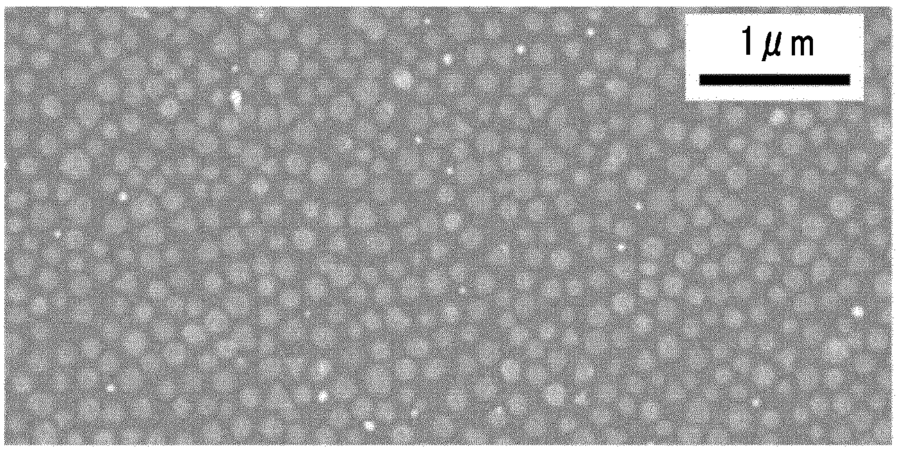

FIG. 5

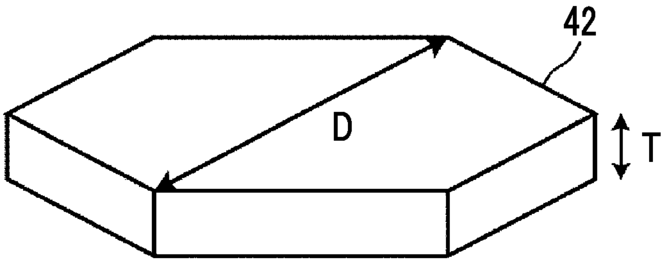


FIG. 6

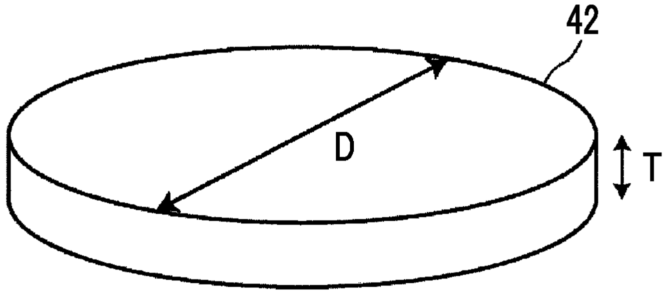


FIG. 7

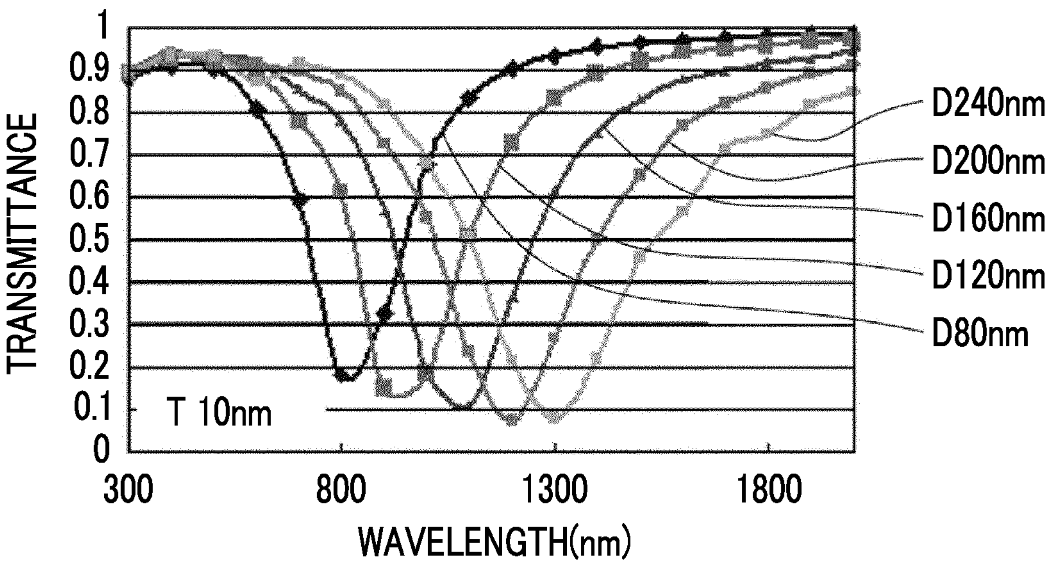

FIG. 8

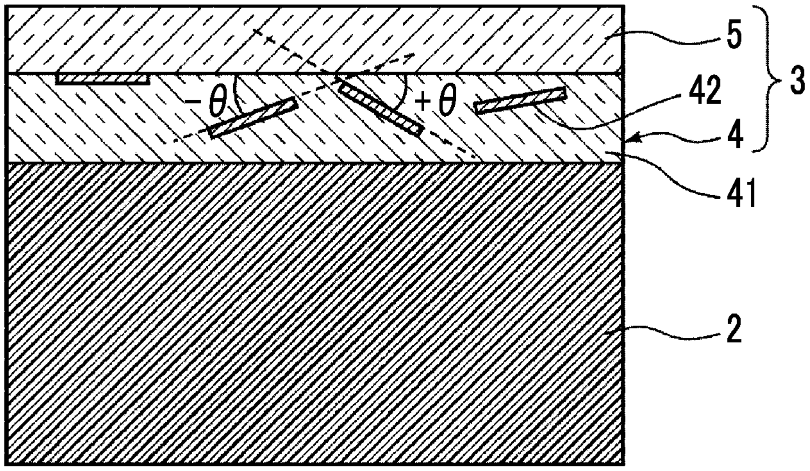


FIG. 9

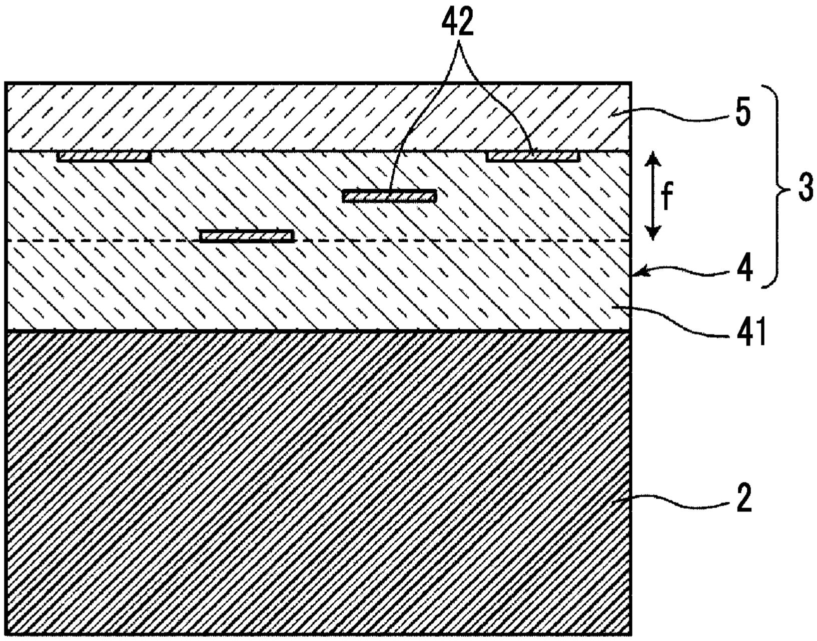

FIG. 10

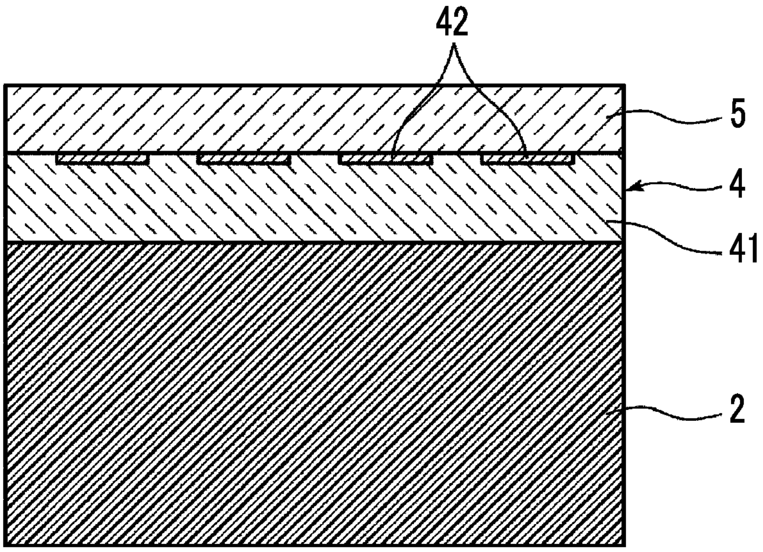


FIG. 11

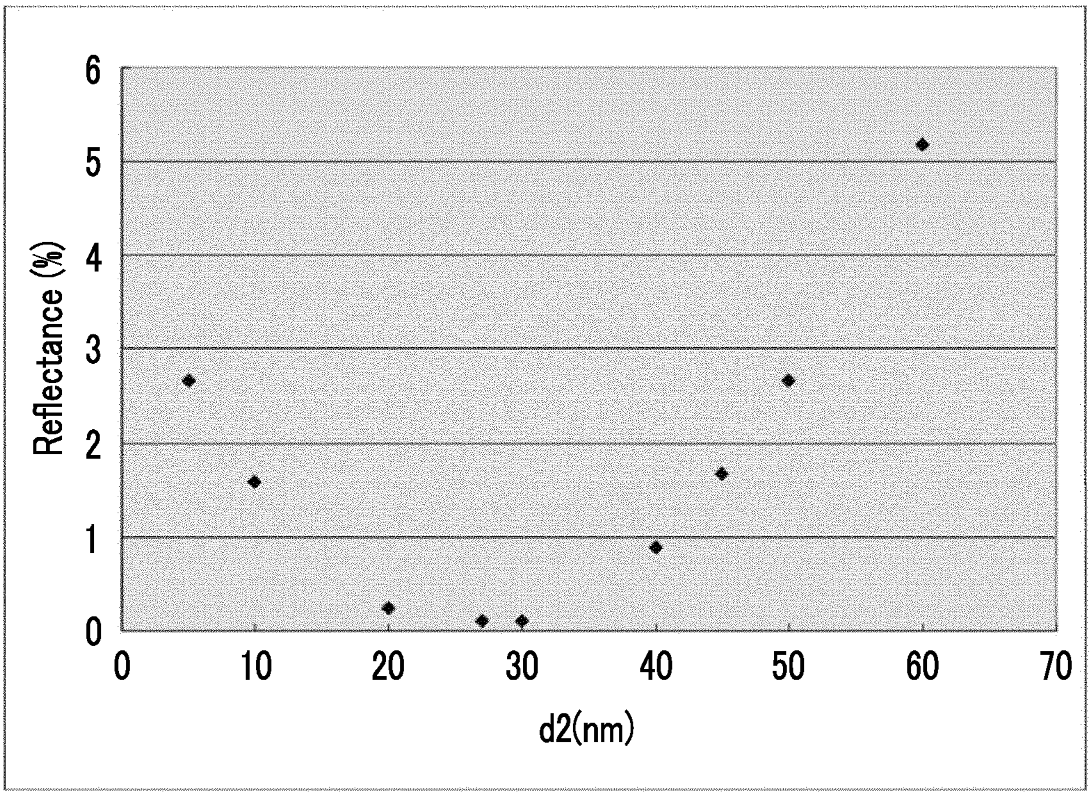

FIG. 12

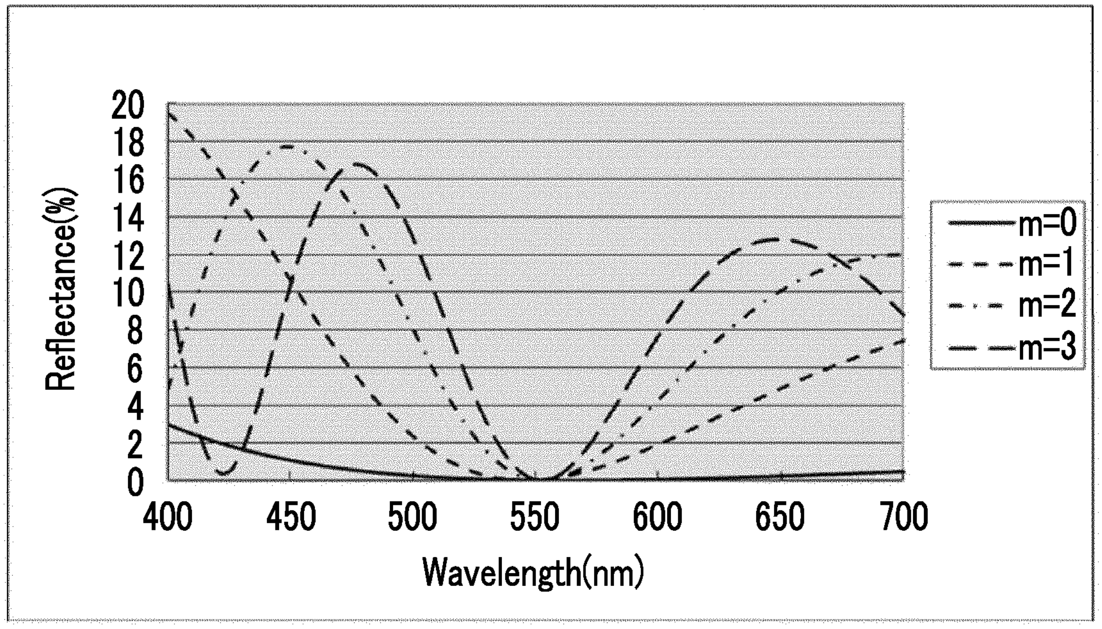
Reflectance(%)
20
18
16
14
12
10
8
6
4
2
0
400
450
500
550
600
650
700
Wavelength(nm)
m=0
m=1
m=2
m=3

FIG. 13

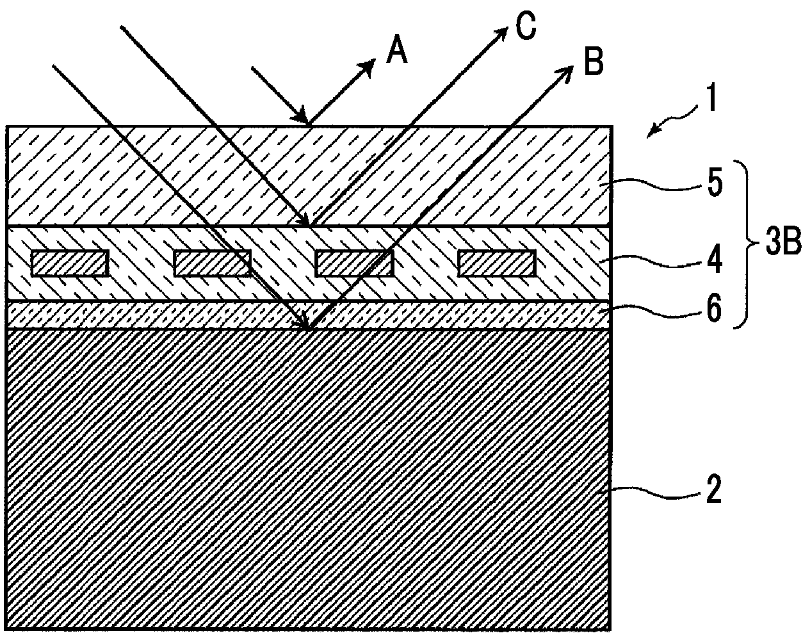
A
C
B
1
5
4
6
3B
2

FIG. 14

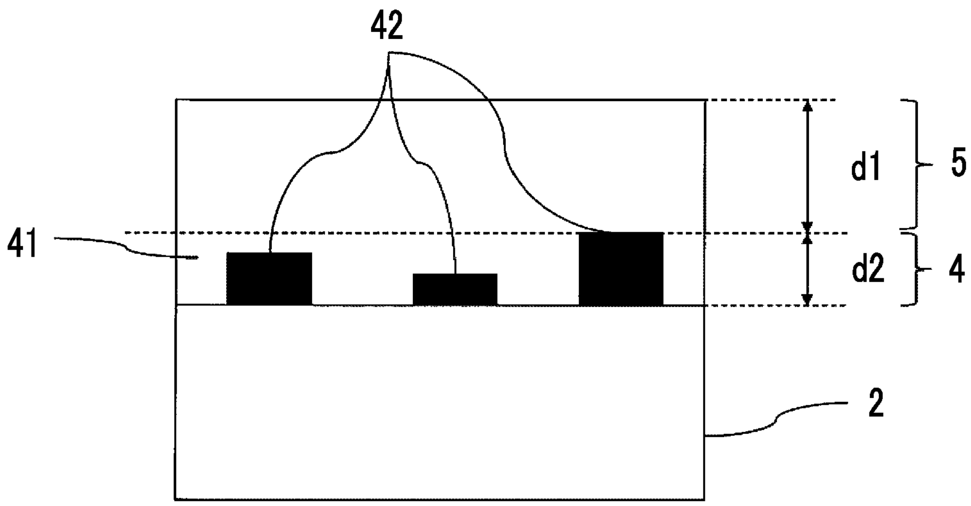


FIG. 15

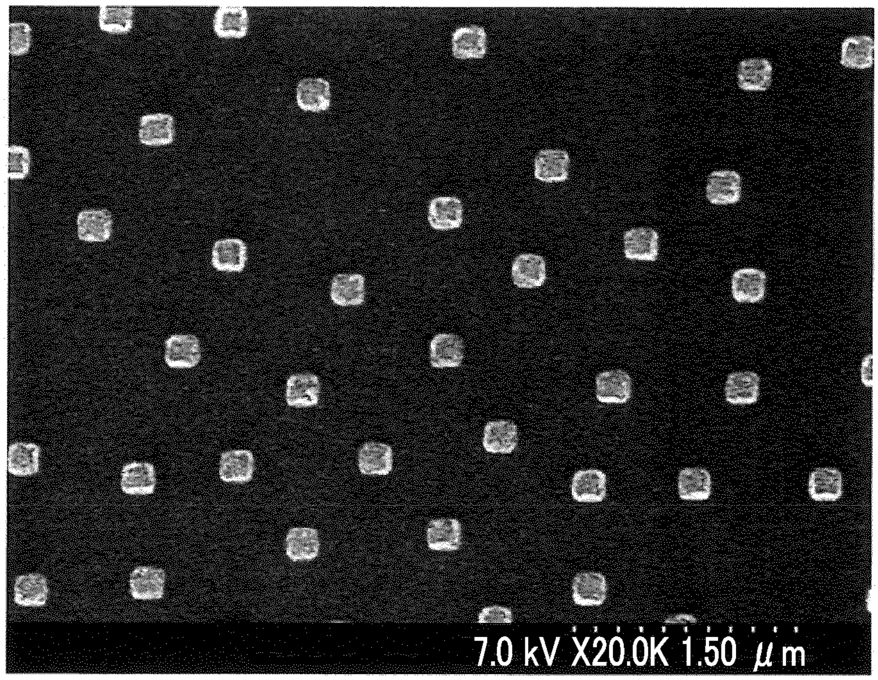

FIG. 16

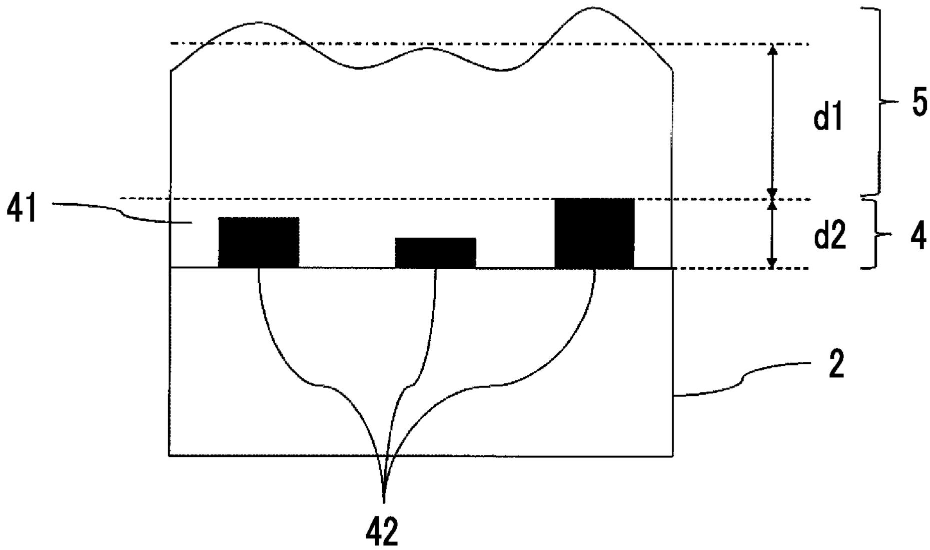

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014046597 A
- WO 2004031813 A
- EP 2270554 A1
- JP 2014194446 A
- JP 2014184688 A
- JP 2013254183 A


### Non-patent literature cited in the description


- *Advanced Optical Materials,* 2015, vol. 3, 44-48
- **TAKEHARU TANI et al.** Transparent near-infrared reflector metasurface with randomly dispersed silver nanodisks. *Optics Express,* 09 April 2014, vol. 22 (8), 9262
- **D. R. SMITH et al.** *Phys. Rev. B,* 2002, vol. 65, 195104